# EUROPEAN PATENT APPLICATION

(11) **EP 4 835 711 A1**
(43) Date of publication of application: **04.11.2026**
(21) Application number: 24913527.8
(22) Date of filing: 24.12.2024
(51) Int. Cl.: G06F 21/62, G06N 5/04

(54) **PROBABILISTIC LOGIC-BASED DATABASE INFERENCE ATTACK CONTROL DEVICE AND METHOD**

(30) Priority: 28.12.2023 KR 20230194916
(71) Applicant: Yoongnet Inc., Seoul 06965 (KR); Hong, Ki Yoong, Seoul 06966 (KR)
(72) Inventor: HONG, Paul, Seoul 06966 (KR); HONG, Seung Eun, Seoul 06598 (KR); HONG, Pyeong Kang, Seoul 06966 (KR); HONG, Ki Yoong, Seoul 06966 (KR)
(74) Representative: Jung, Minkyu
(86) International application number: PCT/KR2024/021006
(87) International publication number: WO 2025/143736

(57) **Abstract**

The present invention relates to an apparatus and method for controlling database (DB) inference attacks and, more particularly, to an apparatus and method for controlling database inference attacks based on probabilistic logic, in which result data output from a database management system (DBMS) are received, data attributes corresponding to inference attack elements predetermined to have a greater influence on inferring sensitive information than other inference attack elements are restricted according to a sensitive inference attack element threshold for each result data record constituting the result data, an inference risk probability for inferring the sensitive information is calculated based on predetermined probabilistic inference attack logic, an inference attack is determined to have been detected when the calculated inference risk probability exceeds a risk determination threshold, one or more data attributes corresponding to inference attack elements associated with the detected inference attack are restricted, and, based on predetermined inferable logic that may be used for an inference attack in addition to the probabilistic inference attack logic, data attributes corresponding to inference attack elements constituting the inferable logic are further restricted according to an inferable logic threshold.

## Description

### Technical Field

The present invention relates to an apparatus and method for controlling database (DB) inference attacks and, more particularly, to an apparatus and method for controlling database inference attacks based on probabilistic logic, in which result data output from a database management system (DBMS) are received, data attributes corresponding to inference attack elements predetermined to have a greater influence on inferring sensitive information than other inference attack elements are restricted according to a sensitive inference attack element threshold, an inference risk probability for inferring the sensitive information is calculated based on predetermined probabilistic inference attack logic, an inference attack is determined to have been detected when the calculated inference risk probability exceeds a risk determination threshold, one or more data attributes corresponding to inference attack elements associated with the inference attack are restricted, and, based on predetermined inferable logic that may be used for an inference attack in addition to the probabilistic inference attack logic, data attributes corresponding to inference attack elements constituting the inferable logic are further restricted according to an inferable logic threshold, thereby ensuring privacy by preventing inference of the sensitive information while improving the usability of data in each result data record.

### BACKGROUND ART

Recently, information and communication technologies have rapidly advanced, and online services have become widely distributed and utilized. In order to provide such services, each Service Provider (SP) is required to manage a large volume of customer information in a database (DB) and distribute various knowledge-based contents, including finance, shopping, education, and healthcare services, based on information stored in the DB.

As customer information is increasingly stored in online databases, the number of hackers attempting to steal customer information stored therein has increased, and incidents involving leakage of large-scale customer information from databases of major service providers have frequently occurred.

Conventionally, service providers have employed access-control technologies that permit or block access to database information according to access-control rules in order to prevent leakage of database information.

In addition, query-control methods for controlling database queries are generally used to protect database information. Specifically, such query-control methods protect important database information by controlling query permissions according to various conditions, such as individual users or groups, and by prohibiting execution of queries considered important from a security perspective.

However, conventional access-control and query-control technologies fundamentally cannot detect inference attacks. An inference attack refers to an attack in which other information that is sensitive to an individual or required to be protected as confidential (hereinafter, "sensitive information") is inferred using certain publicly available or obtainable data.

To prevent such inference attacks, techniques have been employed that prevent disclosure of information likely to be used for inference attacks, apply de-identification techniques, or encrypt information stored in databases.

However, such techniques cannot detect inference attacks based on probabilistic logic in real time and are limited in their ability to provide real-time protection against inference and leakage of sensitive information resulting from detected inference attacks based on probabilistic logic while maintaining a required level of data usability.

Furthermore, such techniques have limitations in fundamentally defending against inference attacks based on inferable knowledge. Here, inferable knowledge refers to data that may be obtainable from other information sources, social-engineering techniques, or other means. Further, "inferable logic" refers to logic constructed from inferable knowledge obtainable from external information sources, social engineering, auxiliary publicly available information, or combinations thereof. Accordingly, such techniques are limited in fundamentally preventing inference attacks in which sensitive information intended to remain confidential is probabilistically inferred by combining data retrieved from a database and data obtained from other information sources with publicly available probabilistic knowledge and statistical information relating to the sensitive information.

Accordingly, there is a need for a method capable of fundamentally preventing database inference attacks performed by combining publicly available or obtainable probabilistic knowledge and statistical information with inferable knowledge. There is also a need for a method for controlling inference according to probabilistic logic so that relatively highly sensitive data are prevented from being disclosed first.

### DISCLOSURE OF INVENTION

### Technical Problem

Accordingly, an object of the present invention is to provide an apparatus and method for controlling database inference attacks based on probabilistic logic that receive result data output from database management systems (DBMSs) that manage different numbers of databases, are remotely separated and independently operated, or operate in different cloud systems; detect, with reference to inference knowledge including probabilistic logic, inference attacks based on probabilistic logic that cannot be detected by access control methods, query control methods, de-identification methods, or techniques for concealing or encrypting information stored in databases; respond to inference attacks that may be performed by combining publicly available or obtainable probabilistic knowledge and statistical information with inferable knowledge; and prevent inference of sensitive information by restricting one or more data attributes associated with an inference attack and providing the restricted result data to the corresponding inquirer, thereby preventing relatively more sensitive data from being disclosed first.

### Technical Solution

According to one aspect of the present invention, there is provided an apparatus for controlling database (DB) inference attacks based on probabilistic logic, comprising an input/output unit configured to receive queries from a plurality of inquirer terminal units and output the queries, receive result data in response to the received queries, and provide the result data to the corresponding inquirer terminal unit; one or more database management systems (DBMSs) configured to access at least one database (DB) including a plurality of data attributes, wherein at least one DB includes sensitive data attributes designated as sensitive information to be protected, the one or more DBMSs being configured to search the DBs in response to the queries input from the input/output unit, and generate and output the corresponding result data; and a probabilistic inference control unit configured to establish inference knowledge including inference attack elements corresponding to data attributes that can be used to probabilistically infer the sensitive information, and a probabilistic model, probabilistic logic, and probabilistic inference attack logic, each constructed based on the inference attack elements and probabilities associated with the inference attack elements, calculate, with reference to the inference knowledge, an inference risk probability for inferring the sensitive information from inference attack elements extracted from the result data received from the DBMSs, determine that an inference attack has been detected when the calculated inference risk probability exceeds a risk determination threshold (*λ*), restrict data attribute information corresponding to at least one inference attack element capable of inferring the sensitive information among the inference attack elements included in the result data in which the inference attack has been detected, and transmit the restricted result data to the corresponding inquirer terminal unit through the input/output unit.

The probabilistic inference control unit comprises an inference knowledge storage unit configured to store inference knowledge including the probabilistic inference attack logic and inference attack elements corresponding to data attributes previously provided to the inquirer terminal unit; an inference setting unit configured to receive, through a security administrator terminal unit, one or more data attributes included in the DB that can be used to probabilistically infer the sensitive information, together with probability values corresponding to probabilities of inferring the sensitive information from the respective data attributes, generate a probabilistic model, probabilistic logic, and probabilistic inference attack logic including the one or more data attributes and the probability values, store the generated probabilistic model, probabilistic logic, and probabilistic inference attack logic as inference knowledge in the inference knowledge storage unit, designate the data attributes included in the probabilistic inference attack logic as inference attack elements, and output an inference attack element set including the designated inference attack elements; an inference attack element extraction unit configured to receive and establish the inference attack element set from the inference setting unit, extract inference attack elements corresponding to the inference attack element set from result data received from the DBMSs, generate an inference attack transaction composed of the extracted inference attack elements, and output the generated inference attack transaction; a probabilistic inference attack detection unit configured to construct an inference attack element test set including inference attack elements included in the inference attack transaction, together with inference attack elements previously provided to the inquirer terminal unit and stored in the inference knowledge storage unit, examine whether the inference attack elements included in the inference attack element test set satisfy any of the probabilistic inference attack logics stored in the inference knowledge storage unit, calculate, with reference to the probabilistic inference attack logic, an inference risk probability for inferring the sensitive information from inference attack elements included in the inference attack element test set, determine that an inference attack has been detected when the calculated inference risk probability exceeds the risk determination threshold (*λ*), and output restriction request information specifying one or more inference attack elements to be restricted among the inference attack elements included in the inference attack transaction when the inference attack is detected; and a probabilistic inference attack control unit configured to, upon receiving the restriction request information from the probabilistic inference attack detection unit, restrict data attributes corresponding to the inference attack elements specified in the restriction request information among data attributes included in result data corresponding to the inference attack transaction in which the inference attack has been detected, and provide the restricted result data to the corresponding inquirer terminal unit through the input/output unit.

The probabilistic inference control unit further comprises an inference attack serialization unit configured to serialize and output a plurality of inference attack transactions received from the inference attack element extraction unit, wherein the probabilistic inference attack detection unit is configured to detect an inference attack based on the serialized inference attack transactions.

The inference setting unit comprises an inference logic generation unit configured to receive, through a security administrator terminal unit, one or more data attributes included in the DB that can be used to infer the sensitive information, together with probability values corresponding to probabilities of inferring the sensitive information from the respective data attributes, generate a probabilistic model, probabilistic logic, and probabilistic inference attack logic including the one or more data attributes and the probability values, and store the generated probabilistic model, probabilistic logic, and probabilistic inference attack logic as inference knowledge in the inference knowledge storage unit; and an inference attack element generation unit configured to designate the data attributes included in the probabilistic inference attack logic as inference attack elements and output the designated inference attack elements.

The inference logic generation unit comprises a probabilistic logic generation unit configured to receive, through a security administrator terminal unit, one or more data attributes included in the DB that are directly associated with the sensitive information and can be used to infer the sensitive information, receive probabilities for inferring the sensitive information from the one or more data attributes, generate probabilistic logic and calculated probability values corresponding to the probabilistic logic based on a probabilistic model and conditional probabilities for the respective data attributes, and store the generated probabilistic logic and the calculated probability values in the inference knowledge storage unit as inference knowledge; a probabilistic inference attack logic generation unit configured to generate, as inference knowledge, probabilistic inference attack logic including the probabilistic logic generated by the probabilistic logic generation unit, and store the generated probabilistic inference attack logic in the inference knowledge storage unit; and an inferable logic generation unit configured to receive one or more data attributes that can be used to increase the accuracy of inference attacks on the sensitive information, generate inferable logic including the one or more data attributes, combine the inferable logic with the probabilistic inference attack logic to generate expanded inference attack logic, and store the expanded inference attack logic as inference knowledge in the inference knowledge storage unit.

The inference setting unit further comprises a sensitive inference attack subset setting unit configured to receive, through a security administrator terminal unit, one or more inference attack elements included in the probabilistic inference attack logic that have a greater influence on inferring the sensitive information than other inference attack elements, and register and establish the received one or more inference attack elements as a sensitive inference attack subset.

The inference setting unit further comprises a threshold setting unit configured to, in response to a threshold setting request received from a security administrator terminal unit, receive a risk determination threshold (*λ*) for detecting an inference attack based on the probabilistic inference attack logic, a sensitive inference attack element threshold (*ρₓ*) indicating the number of inference attack elements to be restricted among the inference attack elements included in the sensitive inference attack subset when the sensitive inference attack subset is detected, and an inferable logic threshold (*τ*) indicating the number of inference attack elements to be restricted among the inference attack elements included in the inferable logic when the inferable logic is detected, and store and establish the received thresholds in the inference knowledge storage unit.

The probabilistic inference attack detection unit is configured to, for each inference attack transaction record constituting the inference attack transaction, construct an inference attack element test set including inference attack elements contained in the inference attack transaction record, together with previously provided inference attack elements stored in the inference knowledge storage unit, when the inference attack element test set includes an inference attack element set corresponding to the sensitive inference attack subset, determine sensitive inference attack elements to be restricted according to the sensitive inference attack element threshold (*ρₓ*), store the sensitive inference attack elements determined to be restricted in the inference knowledge storage unit as previously restricted sensitive inference attack elements, determine newly restricted sensitive inference attack elements, from an inference attack element test set generated thereafter, according to the sensitive inference attack element threshold (*ρₓ*), based on an inference attack element set obtained by removing the previously restricted sensitive inference attack elements, remove the sensitive inference attack elements to be restricted from the inference attack element test set, and construct an inference attack element evaluation candidate set by removing the sensitive inference attack elements to be restricted from inference attack elements common to both the inference attack element test set and the probabilistic inference attack logic, calculate an inference risk probability for inferring the sensitive information from the inference attack elements included in the inference attack element test set with reference to the probabilistic inference attack logic, determine that an inference attack has been detected when the calculated inference risk probability exceeds the risk determination threshold (*λ*), determine one inference attack element included in the inference attack element evaluation candidate set as an inference attack element to be restricted, update the inference attack element test set and the inference attack element evaluation candidate set by removing the determined inference attack element therefrom, repeatedly calculate the inference risk probability based on the updated inference attack element test set, and repeatedly determine one inference attack element included in the inference attack element evaluation candidate set as an inference attack element to be restricted until the calculated inference risk probability no longer exceeds the risk determination threshold (*λ*).

The probabilistic inference attack detection unit is configured to determine whether the inference attack element test set includes inference attack elements constituting the inferable logic and, when it is determined that the inferable logic is constituted, determine one or more inference attack elements to be restricted among the inference attack elements constituting the inferable logic according to the inferable logic threshold (*τ*).

The probabilistic inference attack detection unit is configured, in calculating an inference risk probability for inferring the sensitive information from inference attack elements constituting the probabilistic inference attack logic based on the inference attack element test set from which the sensitive inference attack elements to be restricted have been removed, to calculate the inference risk probability in real time when detecting the inference attack, or to calculate probabilities for the probabilistic logic in advance based on the probabilistic model and conditional probabilities for the respective data attributes, store the calculated probabilities in the inference knowledge storage unit, and, when detecting the inference attack, retrieve, based on the inference attack element test set, previously stored calculated probability values corresponding to the probabilistic inference attack logic from the inference knowledge storage unit, and reference the retrieved calculated probability values.

The probabilistic inference attack control unit is configured to restrict the data attribute information corresponding to the inference attack elements to be restricted in the result data by performing masking or anonymization of the data attribute information, or by removing the data attribute information from the result data.

To achieve the above object, a method for controlling database (DB) inference attacks based on probabilistic logic comprises a DB search process in which one or more DBMSs managing at least one DB including sensitive information to be protected among one or more DBs storing information including a plurality of data attributes perform a search of the DBs in response to a query and generate and output result data corresponding to a search result; and a probabilistic inference control process in which a probabilistic inference control unit establishes inference knowledge including inference attack elements corresponding to data attributes that can be used to probabilistically infer the sensitive information, and a probabilistic model, probabilistic logic, and probabilistic inference attack logic, each constructed based on the inference attack elements and probabilities associated with the inference attack elements, calculates, with reference to the inference knowledge, an inference risk probability for inferring the sensitive information from inference attack elements extracted from the result data received from the DBMSs, determines that an inference attack has been detected when the calculated inference risk probability exceeds a risk determination threshold (*λ*), restricts data attributes corresponding to at least one inference attack element capable of inferring the sensitive information among the inference attack elements included in the result data in which the inference attack has been detected, and transmits the restricted result data to the corresponding inquirer terminal unit through an input/output unit.

The probabilistic inference control process comprises an inference setting step in which an inference setting unit receives, through a security administrator terminal unit, from a security administrator, one or more data attributes included in the DB that can be used to probabilistically infer the sensitive information, together with probability values corresponding to probabilities of inferring the sensitive information from the respective data attributes, generates a probabilistic model, probabilistic logic, and probabilistic inference attack logic including the one or more data attributes and the probability values, stores the generated probabilistic model, probabilistic logic, and probabilistic inference attack logic as inference knowledge in an inference knowledge storage unit, designates the data attributes included in the probabilistic inference attack logic as inference attack elements, and outputs an inference attack element set including the designated inference attack elements; an inference attack element extraction step in which the probabilistic inference control unit receives the inference attack element set from the inference setting unit and provides the inference attack element set to an inference attack element extraction unit, the inference attack element extraction unit extracts inference attack elements corresponding to the inference attack element set from result data received from the DBMSs, generates an inference attack transaction composed of the extracted inference attack elements, and outputs the generated inference attack transaction; a probabilistic inference attack detection step in which the probabilistic inference control unit, through a probabilistic inference attack detection unit, receives the inference attack transaction, constructs an inference attack element test set including inference attack elements contained in the inference attack transaction together with inference attack elements previously provided to the inquirer terminal unit and stored in the inference knowledge storage unit, examines whether the inference attack elements included in the inference attack element test set satisfy any of the probabilistic inference attack logics stored in the inference knowledge storage unit, calculates, with reference to the probabilistic inference attack logic, an inference risk probability for inferring the sensitive information from the inference attack elements included in the inference attack element test set, determines that an inference attack has been detected when the calculated inference risk probability exceeds the risk determination threshold (*λ*), and outputs restriction request information specifying one or more inference attack elements to be restricted among the inference attack elements included in the inference attack transaction when the inference attack is detected; and a probabilistic inference attack control step in which the probabilistic inference control unit, through a probabilistic inference attack control unit, upon receiving the restriction request information from the probabilistic inference attack detection unit, restricts data attributes corresponding to the inference attack elements specified in the restriction request information among data attributes included in result data corresponding to the inference attack transaction in which the inference attack has been detected, and provides the restricted result data to the corresponding inquirer terminal unit through the input/output unit.

The probabilistic inference control process further comprises an inference attack serialization step in which the probabilistic inference control unit, through an inference attack serialization unit, serializes and outputs a plurality of inference attack transactions received from the inference attack element extraction unit, wherein, in the probabilistic inference attack control step, the probabilistic inference attack control unit, upon receiving the restriction request information from the probabilistic inference attack detection unit, restricts data attributes corresponding to the inference attack elements specified in the restriction request information among data attributes included in the result data corresponding to the inference attack transaction in which the inference attack has been detected, and provides the restricted result data to the corresponding inquirer terminal unit through the input/output unit.

The inference setting step comprises an inference logic generation step in which the inference setting unit, through an inference logic generation unit, receives, from a security administrator via a security administrator terminal unit, one or more data attributes included in the DB that can be used to infer the sensitive information, together with probability values corresponding to probabilities of inferring the sensitive information from the respective data attributes, generates a probabilistic model, probabilistic logic, and probabilistic inference attack logic including the one or more data attributes and the probability values, and stores the generated probabilistic model, probabilistic logic, and probabilistic inference attack logic as inference knowledge in the inference knowledge storage unit; and an inference attack element generation step in which the inference setting unit, through an inference attack element generation unit, designates the data attributes included in the probabilistic inference attack logic as inference attack elements and outputs the designated inference attack elements.

The inference logic generation step comprises a probabilistic logic generation step in which the inference logic generation unit, through a probabilistic logic generation unit, receives, from a security administrator via a security administrator terminal unit, one or more data attributes included in the DB that are directly associated with the sensitive information and can be used to infer the sensitive information, receives probabilities for inferring the sensitive information from the one or more data attributes, generates probabilistic logic and calculated probability values corresponding to the probabilistic logic based on a probabilistic model and conditional probabilities for the respective data attributes, and stores the generated probabilistic logic and the calculated probability values in the inference knowledge storage unit as inference knowledge; a probabilistic inference attack logic generation step in which the inference logic generation unit, through a probabilistic inference attack logic generation unit, generates, as inference knowledge, probabilistic inference attack logic including the probabilistic logic generated by the probabilistic logic generation unit, and stores the generated probabilistic inference attack logic in the inference knowledge storage unit; and an inferable logic generation step in which the inference logic generation unit, through an inferable logic generation unit, receives one or more data attributes that can be used to increase the accuracy of inference attacks on the sensitive information, generates inferable logic including the one or more data attributes, combines the inferable logic with the probabilistic inference attack logic to generate expanded inference attack logic, and stores the expanded inference attack logic as inference knowledge in the inference knowledge storage unit.

The inference setting step further comprises a sensitive inference attack subset setting step in which the inference setting unit, through a sensitive inference attack subset setting unit, receives, from a security administrator via a security administrator terminal unit, one or more inference attack elements included in the probabilistic inference attack logic that have a greater influence on inferring the sensitive information than other inference attack elements, and registers and establishes the received one or more inference attack elements as a sensitive inference attack subset.

The inference setting step further comprises a threshold setting step in which the inference setting unit, through a threshold setting unit, in response to a threshold setting request received from a security administrator terminal unit, receives a risk determination threshold (*λ*) for detecting an inference attack based on the probabilistic inference attack logic, a sensitive inference attack element threshold (*ρₓ*) indicating the number of inference attack elements to be restricted among the inference attack elements included in the sensitive inference attack subset when the sensitive inference attack subset is detected, and an inferable logic threshold (*τ*) indicating the number of inference attack elements to be restricted among the inference attack elements included in the inferable logic when the inferable logic is detected, and stores and establishes the received thresholds in the inference knowledge storage unit.

The probabilistic inference attack detection step comprises: a step of determining sensitive inference attack elements to be restricted in which the probabilistic inference attack detection unit, for each inference attack transaction record constituting the inference attack transaction, constructs an inference attack element test set including inference attack elements contained in the inference attack transaction record, together with previously provided inference attack elements stored in the inference knowledge storage unit, when the inference attack element test set includes an inference attack element set corresponding to the sensitive inference attack subset, determines sensitive inference attack elements to be restricted according to the sensitive inference attack element threshold (*ρₓ*), stores the sensitive inference attack elements determined to be restricted in the inference knowledge storage unit as previously restricted sensitive inference attack elements, and determines newly restricted sensitive inference attack elements, from an inference attack element test set generated thereafter, according to the sensitive inference attack element threshold (*ρₓ*), based on an inference attack element set obtained by removing the previously restricted sensitive inference attack elements; an inference attack detection step in which the probabilistic inference attack detection unit removes the sensitive inference attack elements to be restricted from the inference attack element test set, constructs an inference attack element evaluation candidate set by removing the sensitive inference attack elements to be restricted from inference attack elements common to both the inference attack element test set and the probabilistic inference attack logic, calculates an inference risk probability for inferring the sensitive information based on the inference attack element test set, and determines that an inference attack has been detected when the calculated inference risk probability exceeds the risk determination threshold (*λ*); and a first step of determining inference attack elements to be restricted in which the probabilistic inference attack detection unit, when it is determined that the inference attack has been detected, determines one inference attack element included in the inference attack element evaluation candidate set as an inference attack element to be restricted, updates the inference attack element test set and the inference attack element evaluation candidate set by removing the determined inference attack element therefrom, repeatedly calculates the inference risk probability based on the updated inference attack element test set, and repeatedly determines one inference attack element included in the inference attack element evaluation candidate set as an inference attack element to be restricted until the calculated inference risk probability no longer exceeds the risk determination threshold (*λ*).

The probabilistic inference attack detection step further comprises a second step of determining inference attack elements to be restricted in which the probabilistic inference attack detection unit determines whether the inference attack element test set includes inference attack elements constituting the inferable logic and, when it is determined that the inferable logic is constituted, determines one or more inference attack elements to be restricted among the inference attack elements constituting the inferable logic according to the inferable logic threshold (*τ*).

In the probabilistic inference attack detection step, the probabilistic inference attack detection unit, in calculating an inference risk probability for inferring the sensitive information from inference attack elements constituting the probabilistic inference attack logic based on the inference attack element test set from which the sensitive inference attack elements to be restricted have been removed, calculates the inference risk probability in real time when detecting the inference attack, or calculates probabilities for the probabilistic logic in advance based on the probabilistic model and conditional probabilities for the respective data attributes, stores the calculated probabilities in the inference knowledge storage unit, and, when detecting the inference attack, retrieves, based on the inference attack element test set, previously stored calculated probability values corresponding to the probabilistic inference attack logic from the inference knowledge storage unit, and references the previously stored calculated probability values.

In the probabilistic inference attack control step, the probabilistic inference attack control unit restricts the data attribute information corresponding to the inference attack elements to be restricted in the result data by performing masking or anonymization of the data attribute information, or by removing the data attribute information from the result data.

### Advantageous Effects

The present invention establishes probabilistic inference attack logic composed of inference attack elements each having a probability of inferring sensitive information under corresponding conditions, detects whether an inference attack occurs from result data obtained as search results for queries based on the established probabilistic inference attack logic, and restricts data attributes corresponding to inference attack elements capable of constituting an inference attack in the result data, thereby fundamentally preventing information leakage caused by inference attacks.

In addition, the present invention designates, as inference attack elements, data attributes of inferable knowledge that are determined to be obtainable from other information sources, social engineering, or other methods, includes the designated inference attack elements in the probabilistic inference attack logic, and detects result data capable of constituting an inference attack to prevent the inference attack, thereby preventing inference of sensitive information based on the inferable knowledge.

In addition, since the present invention constructs the probabilistic inference attack logic based on probabilities and performs restriction processing on one or more data attributes corresponding to inference attack elements in the result data based on the probabilities, the present invention can more precisely prevent inference of sensitive information by preventing data attributes having a probability of inferring the sensitive information from being used to infer the sensitive information.

In addition, since the present invention preferentially performs restriction processing on one or more data attributes having relatively higher sensitivity among the data attributes corresponding to the inference attack elements constituting the probabilistic inference attack logic, the present invention can more precisely prevent inference of sensitive information by preventing the data attributes having relatively higher sensitivity from being used to infer the sensitive information.

In addition, the present invention serializes simultaneous or parallel inference attacks to detect inference attack elements, thereby detecting race-condition inference attacks and preventing information leakage.

In addition, since the present invention detects inference attacks on result data corresponding to queries output from a plurality of DBMSs, the present invention can detect and defend against inference attacks targeting multiple databases.

### Brief Description of the Drawings

FIG. 1 is a diagram illustrating the configuration of an apparatus for controlling DB inference attacks based on probabilistic logic according to the present invention.
FIG. 2 is a diagram illustrating the configuration of a probabilistic inference control unit of the apparatus for controlling DB inference attacks based on probabilistic logic according to the present invention.
FIG. 3 is a diagram for explaining a method of extracting inference attack elements by an inference attack element extraction unit of the probabilistic inference control unit according to the present invention.
FIG. 4 is a diagram illustrating the configuration of an inference setting unit of the probabilistic inference control unit according to the present invention.
FIG. 5 is a diagram illustrating an example of a DB configuration according to an embodiment of the present invention.
FIG. 6 is a diagram for explaining a method of constructing probabilistic inference attack logic according to an embodiment of the present invention.
FIG. 7 is a diagram illustrating an inference attack element set (*E*) according to an embodiment of the present invention.
FIG. 8 is a diagram for explaining a method of serializing inference attacks according to concurrent processing of two result data according to an embodiment of the present invention.
FIG. 9 is a diagram for explaining a method of serializing inference attacks according to parallel processing of two result data according to an embodiment of the present invention.
FIG. 10 is a diagram for explaining a method of restricting data attributes in result data according to an embodiment of the present invention.
FIG. 11 is a diagram for explaining a method of restricting data attributes in result data according to another embodiment of the present invention.
FIG. 12 is a flowchart illustrating a method for controlling DB inference attacks based on probabilistic logic according to the present invention.

### Best Mode for Carrying Out the Invention

Hereinafter, with reference to the accompanying drawings, the configuration and operation of an apparatus for controlling DB inference attacks based on probabilistic logic according to the present invention will be described in detail, and a method for controlling DB inference attacks using the apparatus will also be described.

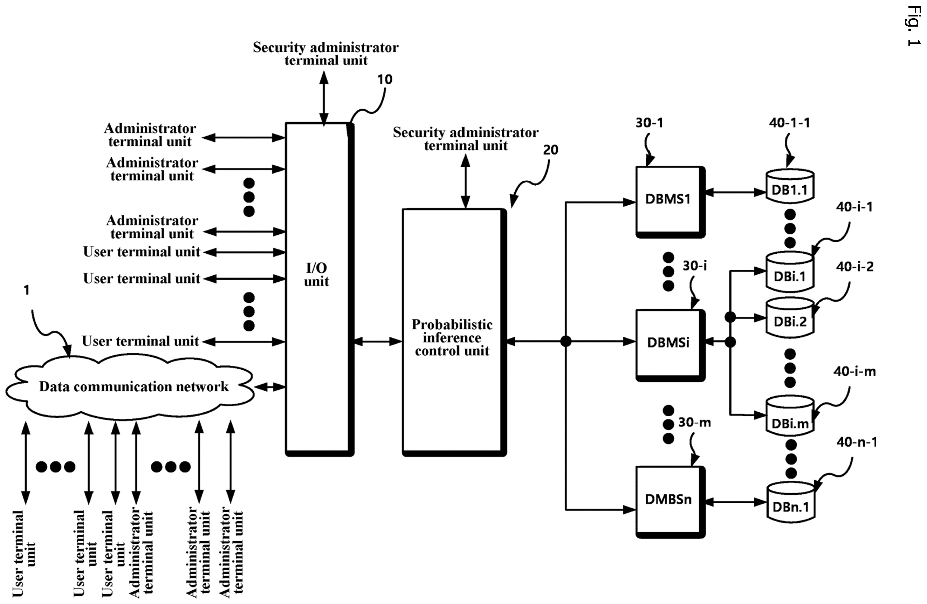

FIG. 1 is a diagram illustrating the configuration of an apparatus for controlling DB inference attacks based on probabilistic logic according to the present invention.

Referring to FIG. 1, the apparatus for controlling DB inference attacks based on probabilistic logic according to the present invention includes an input/output unit 10, a probabilistic inference control unit 20, and at least one DBMS 30.

The input/output unit 10 is directly connected to a plurality of inquirer terminal units or connected thereto through a data communication network 1.

The inquirer terminal units may transmit queries to the probabilistic inference control unit 20 through the input/output unit 10 by using various DB client programs, such as web access using HTTP/HTTPS, a DBMS client program, or a proprietary client program.

The input/output unit 10 receives queries from the inquirer terminal units and provides the queries to the probabilistic inference control unit 20, receives, from the probabilistic inference control unit 20, result data subjected to probabilistic inference control in response to the queries, and provides the received result data to the corresponding inquirer terminal units.

The inquirer may be an administrator or an arbitrary user. Accordingly, the inquirer terminal unit may be an administrator terminal unit or a user terminal unit.

The inquirer terminal unit may be a computing terminal, such as a desktop computer, a personal computer, or a notebook computer, or a mobile terminal, such as a smartphone or a smart pad.

The data communication network 1 may be a wired or wireless Internet network including a mobile communication network supporting third-generation (3G), 4G, or 5G communications, a Local Area Network (LAN), a Wide Area Network (WAN), or a Wi-Fi network, and may further include an intranet, an extranet, or other data communication networks.

The inquirer terminal units, the input/output unit 10, the probabilistic inference control unit 20, the DBMS 30, and the DB 40 may be directly connected to one another through wired connections depending on the system configuration, may be connected through the data communication network 1 using wired or wireless communications, or may be connected by a combination thereof.

The DBMS 30 includes at least one DB 40, searches the corresponding DB 40 in response to an input query, generates result data corresponding to the query, and transmits the generated result data to the probabilistic inference control unit 20. The DBMS 30 may be configured to reside on the same physical server as the probabilistic inference control unit 20, may be configured to reside in the same physical location through the above-described data communication network 1, may be configured to be physically separated, such as in a data center or a cloud environment, or may be configured as a combination thereof. The data stored in the DB 40 may be organized in a single table or in a plurality of tables. When the data are organized in a plurality of tables, the plurality of tables may be located in different DBs 40.

First, the symbols and terms used herein are defined as follows.

[A] denotes all inference attack elements included in A.

{[A]} denotes a set of all inference attack elements included in A (*i*.e., [A]).

len(A) denotes a function that returns the number of inference attack elements included in A.

The result data *r*_{(*u*,*p*,*q*)} is defined by Mathematical Expression 1 below. [Mathematical Expression 1] $\begin{matrix}{r}_{\left(u, p, q\right)} = \left\{\left.{d}_{x}\right|x=1,…,l\right\} \\ {D}_{u} = \left\{\left.{r}_{\left(u, p, q\right)}\right|p=1,…,n, q=1,…,m\right\} \\ Dset = \left\{{D}_{u}\right\}\end{matrix}$

Here, *r*_{*(u*,*p*,*q)*} denotes the *q*-th result data returned by DBMSₚ in response to a query from inquirer *u* and indicates that the result data are composed of a set of data *dₓ*. The data *dₓ* denote data included in the *q*-th result data *r*_{*(u*,*p*,*q)*} of DBMSₚ for the inquirer *u*, ordered according to a retrieval order, a positional order, a temporal order, or the like. For example, when *y* < *z*, the data *d_{y}* precede the data *d_{z}* in the retrieval order, positional order, or temporal order. *Dᵤ* denotes a result data set for the inquirer *u* and is composed of a set of *r*_{*(u*,*p*,*q)*}. *Dₛₑₜ* denotes a result data set for all inquirers and is composed of a set of *Dᵤ*.

The probabilistic inference control unit 20 provides an input query to the corresponding DBMSₚ and receives, from each DBMSₚ, result data *r*_{*(u*,*p*,*q)*} in response to the query.

The probabilistic inference control unit 20 extracts, from data attributes included in the input result data, inference attack elements capable of constituting an inference attack.

When the inference attack elements have been extracted, the probabilistic inference control unit 20 determines whether the extracted inference attack elements constitute the predefined probabilistic inference attack logic.

When it is determined that the extracted inference attack elements constitute the probabilistic inference attack logic, the probabilistic inference control unit 20 restricts data attribute information corresponding to the inference attack elements in the result data so that the predefined sensitive information cannot be inferred, and then provides result data subjected to probabilistic inference control to the corresponding inquirer terminal unit through the input/output unit 10.

The restriction processing may include masking or anonymizing the data attribute information corresponding to the inference attack elements so that the data attribute information cannot be identified, or removing the corresponding data attribute information from the result data.

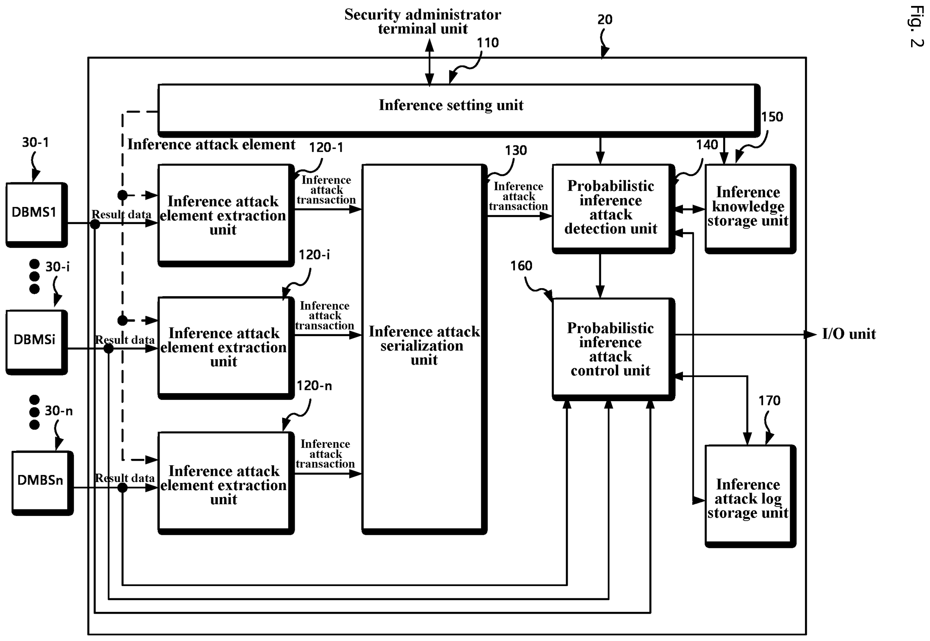

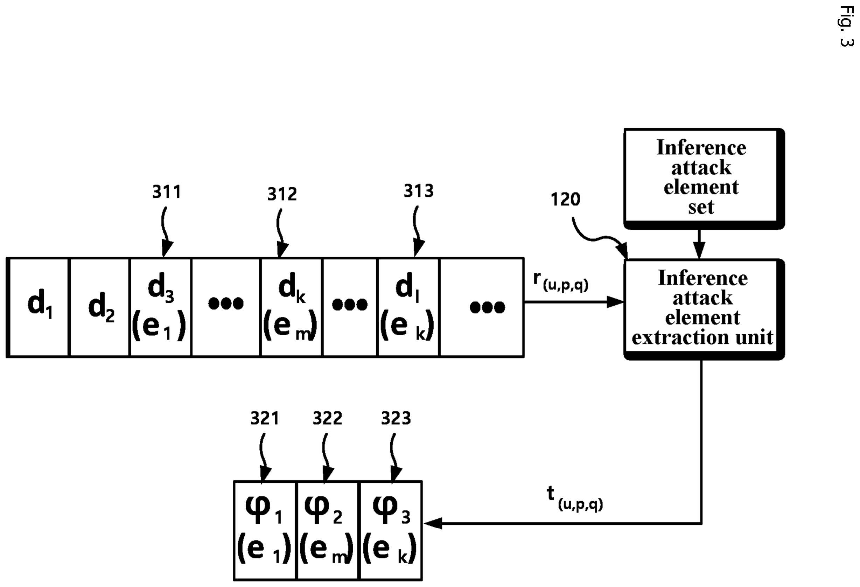

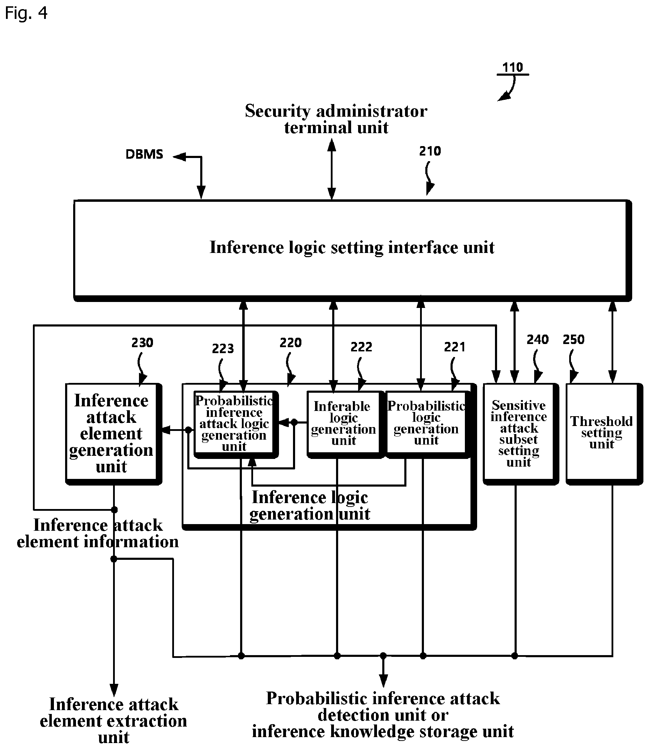

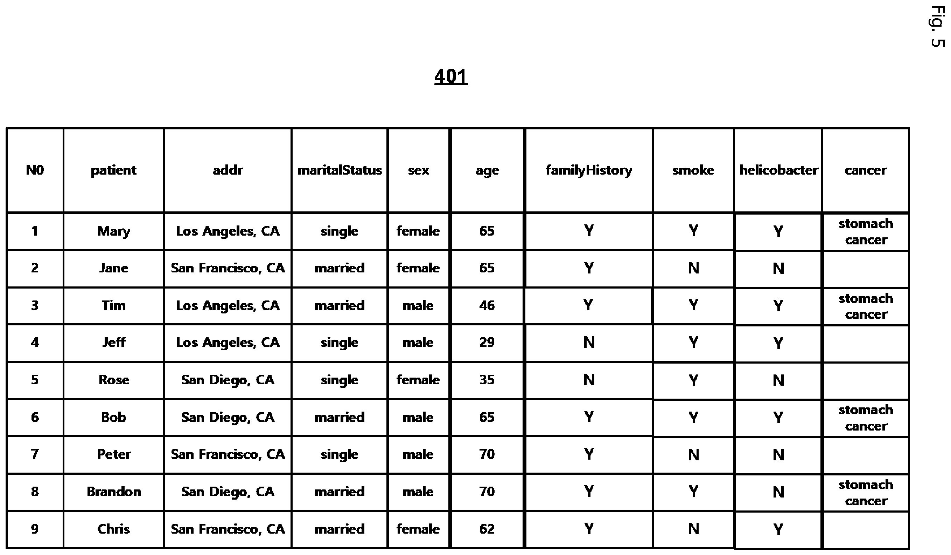

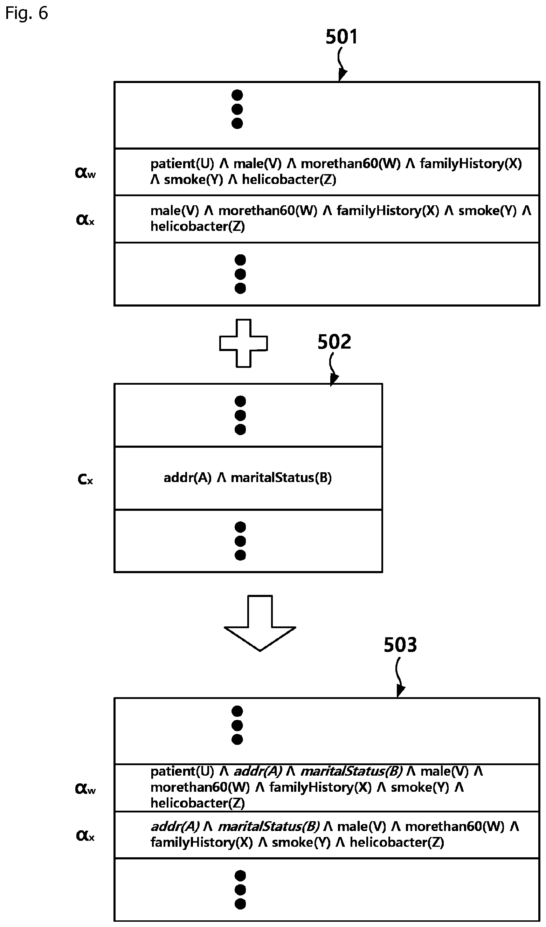

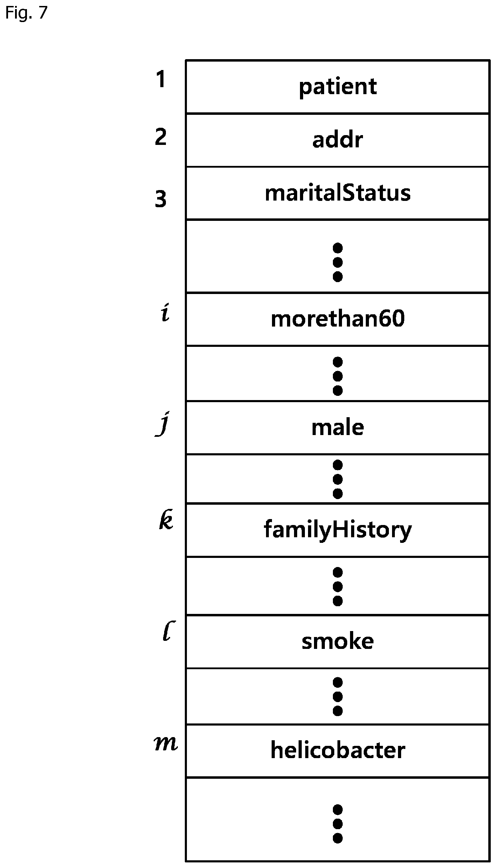

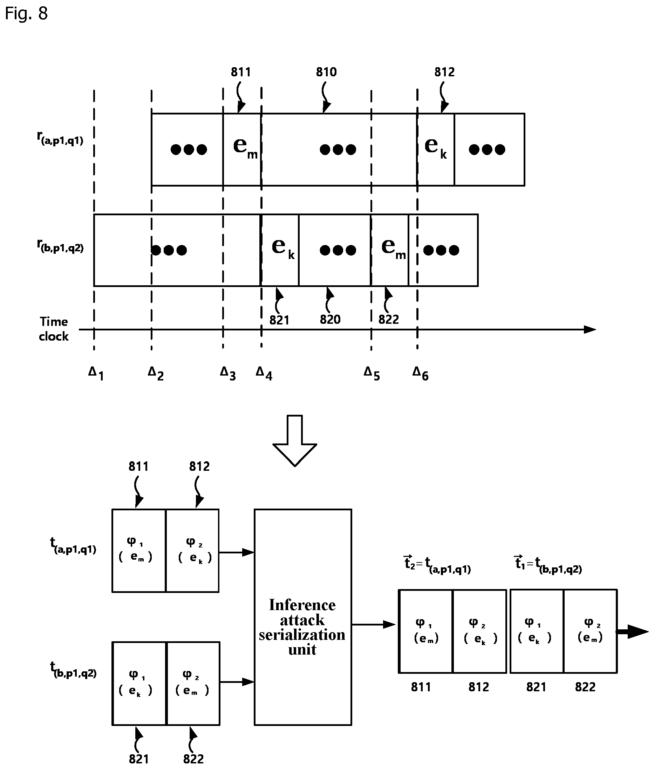

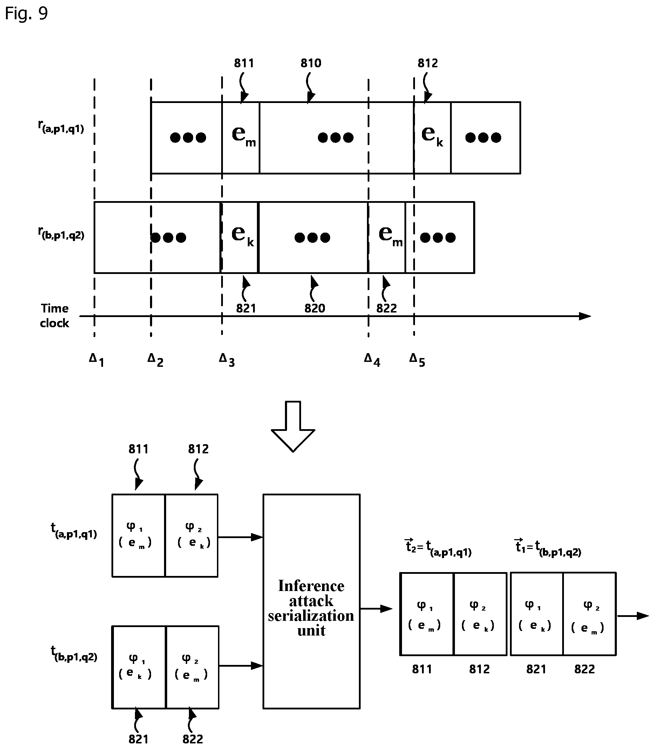

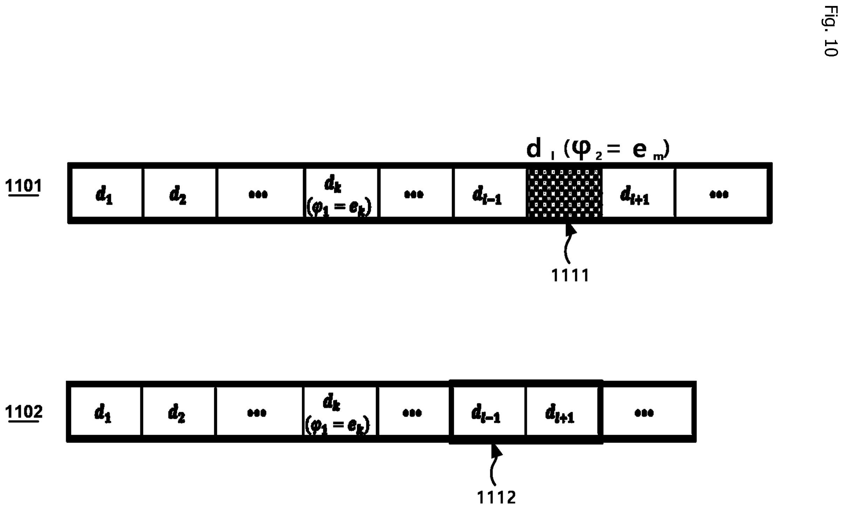

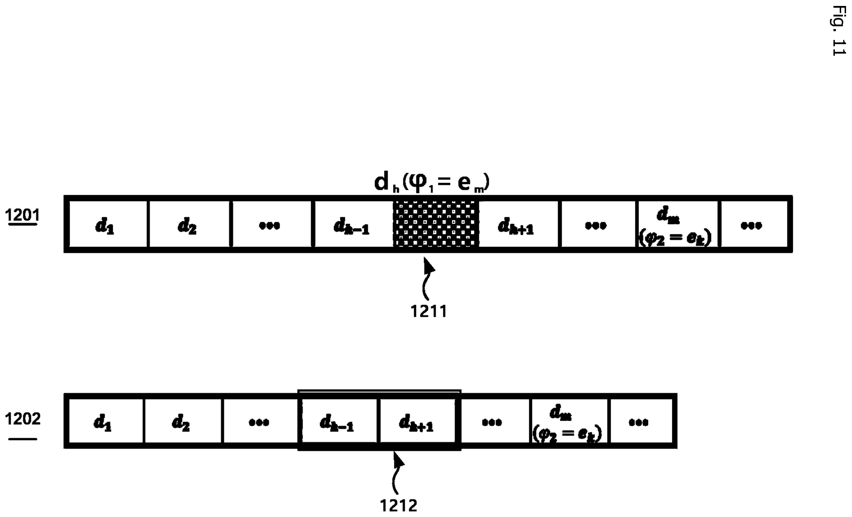

FIG. 2 is a diagram illustrating the configuration of the probabilistic inference control unit 20 of the apparatus for controlling DB inference attacks based on probabilistic logic according to the present invention; FIG. 3 is a diagram for explaining a method of extracting inference attack elements by the inference attack element extraction unit of the probabilistic inference control unit according to the present invention; FIG. 4 is a diagram illustrating the configuration of the inference setting unit of the probabilistic inference control unit according to the present invention; FIG. 5 is a diagram illustrating an example of a DB configuration according to an embodiment of the present invention; FIG. 6 is a diagram for explaining a method of constructing probabilistic inference attack logic according to an embodiment of the present invention; FIG. 7 is a diagram illustrating inference attack elements according to an embodiment of the present invention; FIG. 8 is a diagram for explaining a method of serializing inference attacks according to concurrent processing of two result data according to an embodiment of the present invention; FIG. 9 is a diagram for explaining a method of serializing inference attacks according to parallel processing of two result data according to an embodiment of the present invention; FIG. 10 is a diagram for explaining a method of restricting data attributes in result data according to an embodiment of the present invention; and FIG. 11 is a diagram for explaining a method of restricting data attributes in result data according to another embodiment of the present invention.

Hereinafter, with reference to FIGS. 2 to 11, an embodiment in which the DB 40 is configured as table 401, as shown in FIG. 5, will be described to explain the configuration of inference attack elements and probabilistic inference attack logic, as well as an inference control method and operation through inference attack detection and restriction processing.

First, the configuration of a table included in the DB 40, which will be referred to in describing an embodiment of the present invention, will be described.

The data stored in the DB 40 may be organized as a single table 401 including a plurality of records, each record having respective data attributes. In the example of FIG. 5, the table 401 consists of nine records having nine data attributes. Alternatively, the data stored in the DB 40 may have the nine data attributes while being divided into a plurality of tables.

In the example of FIG. 5, the table 401 consists of nine records having nine data attributes defined as patient name ("patient"), address ("addr"), marital status ("maritalStatus"), sex ("sex"), age ("age"), family history ("familyHistory"), smoking ("smoke"), *Helicobacter* ("helicobacter"), and cancer ("cancer"). Eight of the data attributes, namely, "patient", "addr", "maritalStatus", "sex", "age", "familyHistory", "smoke", and "helicobacter", may constitute inference attack elements.

In the example of FIG. 5, the "cancer" data attribute is designated as sensitive information to be protected. It is assumed that a query directly accessing the "cancer" data attribute, or a query result including the contents thereof, cannot be obtained because such access is blocked by conventional protection mechanisms, such as query restriction or access control. Accordingly, the inquirer cannot directly obtain information on the "cancer" data attribute from the DB 40.

The probabilistic inference control unit 20 includes an inference setting unit 110, a plurality of inference attack element extraction units 120 configured to receive result data from the respective DBMSs 30, an inference attack serialization unit 130, a probabilistic inference attack detection unit 140, an inference knowledge storage unit 150, a probabilistic inference attack control unit 160, and an inference attack log storage unit 170.

As shown in FIG. 4, the inference setting unit 110 includes an inference logic setting interface unit 210, an inference logic generation unit 220, an inference attack element generation unit 230, a sensitive inference attack subset setting unit 240, and a threshold setting unit 250.

The inference logic setting interface unit 210 is connected to a security administrator terminal unit directly or through the input/output unit 10.

The inference logic setting interface unit 210 provides the connected security administrator terminal unit with inference logic setting means, enables data attributes of tables included in the DBs 40 and data attributes corresponding to sensitive information to be identified through the inference logic setting means, and provides setting means for each inference logic setting item so that each inference logic setting item can be configured.

The inference logic setting items may include probabilistic inference attack logic including probabilistic logic and, optionally, inferable logic, a sensitive inference attack subset (*sₓ*), thresholds, and the like.

The inference logic generation unit 220 includes a probabilistic logic generation unit 221, an inferable logic generation unit 222, and a probabilistic inference attack logic generation unit 223, generates probabilistic inference attack logic, and stores the generated probabilistic inference attack logic in the inference knowledge storage unit 150 through the probabilistic inference attack detection unit 140 or directly in the inference knowledge storage unit 150.

The probabilistic logic generation unit 221 generates a probabilistic model by receiving conditions and probabilities for each inference attack element through setting means provided via the inference logic setting interface unit 210, the setting means being configured to set conditions and probabilities for inference attack elements, which are data attributes having probabilities of inferring the sensitive information and are provided to the security administrator terminal unit, and generates probabilistic logic based on the generated probabilistic model.

When probabilities for the respective inference attack elements have been set, the probabilistic logic generation unit 221 calculates and establishes probabilistic rules, conditional probabilities for the respective variables, and the like in advance, generates probabilistic logic, and outputs the generated probabilistic logic.

In the example of FIG. 5, the sensitive information is "cancer", and the data attributes directly associated with stomach cancer are "patient", "sex", "age", "familyHistory", "smoke", and "helicobacter". A probabilistic model established based thereon is shown in Table 1 below.

**[Table 1]**

| Data Attribute | Probability of Stomach Cancer | Increase in Probability of Stomach Cancer |
|---|---|---|
| patient | 4.5% | |
| sex (Male) | | 7.0% |
| age (>= 60) | | 10.0% |
| familyHistory | | 12.5% |
| smoke | | 13.0% |
| hel icobacter | | 13.0% |

Here, the probabilistic model indicates that 4.5% of hospital patients have stomach cancer. It also indicates that the probability of developing stomach cancer increases by 7% for males, by 10% for individuals aged 60 years or older, by 12.5% for individuals having a family history of stomach cancer, by 13% for smokers, and by 13% for individuals infected with Helicobacter.

Probabilistic logic and probability calculations corresponding to the probabilistic model shown in Table 1 are represented as shown in Table 2 below, together with logical operations.

The logical operations may be entered by a security administrator or may be predefined. The logical operations may include and (A), or (V), not (~), >, =, and <. A logical expression may consist of a single logical operation (e.g., A and B or A ∧ B) or may be composed of multiple logical operations (e.g., not (A and B) or ~(A ∧ B)).

```
[Table 2]
```

| Probability Logic | Probability |
|---|---|
| patient (X) | 0.045 |
| pat ient(X) ∧ familyHistory(X) | 0.17 |
| pat ient(X) ∧ familyHistory(X) ∧ smoke(X) | 0.30 |
| patient (X) ∧ familyHistory(X) ∧ smoke(X) A helicobacter(X) | 0.43 |
| patient (X) ∧ familyHistory(X) ∧ smoke(X) A helicobacter(X) ∧ morethan60(X) | 0.53 |
| patient (X) ∧ familyHistory(X) ∧ smoke(X) A helicobacter(X) ∧ morethan60(X) ∧ male(X) | 0.60 |

In Table 2, the variable X denotes a name or an ID. The probability corresponding to the probabilistic logic patient(X) is P(cancer(X)|patient(X)), and the calculated probability value is 0.045 (4.5%). Likewise, the probability corresponding to the probabilistic logic (patient(X) ∧ familyHistory(X)) is P(cancer(X)|patient(X) ∧ familyHistory(X)), and the calculated probability value is 0.17 (17%). Such probability calculations may be performed in real time when determining an inference attack or may be calculated in advance and stored as preset values.

Probabilistic logic required for determining an inference attack, in addition to the probabilistic logic shown in Table 2, is shown in Table 3 below.

**[Table 3]**

| Probability Logic | Probability |
|---|---|
| patient (X) | 0.045 |
| ~patient(X) ∧ familyHistory(X) | 0.1309 |
| ~patient(X) ∧ ~familyHistory(X) ∧ smoke(X) | 0.1566 |
| ~pat ient(X) ∧ -fami lyHistory(X) ∧ ~smoke(X) ∧ helicobacter(X) | 0.1857 |
| ~patient(X) ∧ ~familyHistory(X) ∧ -smoke(X) ∧ ~helicobacter(X) ∧ morethan60(X) | 0.1754 |
| ~patient(X) ∧ ~familyHistory(X) ∧ -smoke(X) ∧ -helicobacter(X) ∧ ~morethan60(X) ∧ male(X) | 0.1489 |

In Table 3, the variable X denotes a name or an ID. The probability corresponding to the probabilistic logic (~patient(X) ∧ familyHistory(X)) is P(cancer(X) | ~patient(X) ∧ familyHistory(X)), and the calculated probability value is (0.17 - 0.045) / (1 - 0.045) = 0.1309 (13.09%). Likewise, the probability corresponding to the probabilistic logic (~patient(X) ∧ ~familyHistory(X) ∧ smoke(X)) is P(cancer(X) | ~patient(X) ∧ ~familyHistory(X) ∧ smoke(X)), and the calculated probability value is (0.30 - 0.17) / (1 - 0.17) = 0.1566 (15.66%). Such probability calculations may also be performed in real time when determining an inference attack or may be calculated in advance and stored as preset values.

Although the probabilistic logic generation unit 221 is configured to construct probabilistic logic using data attributes having the aforementioned probabilities, among the data attributes constituting inference attack elements, namely, "patient", "sex", "age", "familyHistory", "smoke", and "helicobacter", the data attribute "sex" has a probability of inferring the sensitive information only when the corresponding data attribute information indicates "male". Accordingly, the inference attack element is changed to "male". Likewise, since the data attribute "age" has a probability of inferring the sensitive information only when the "age" is 60 years or older, the inference attack element is changed to "morethan60". The probabilistic logic is then constructed using the modified inference attack elements. That is, the probabilistic logic generation unit 221 generates the inference attack elements patient(U), male(V), morethan60(W), familyHistory(X), smoke(Y), and helicobacter(Z) from probabilistic logic having conditions and probability values for inferring the sensitive information, and outputs the generated inference attack elements to the probabilistic inference attack logic generation unit 223.

The probabilistic logic generation unit 221 also generates calculated probability values corresponding to the probabilistic logic and stores the calculated probability values in the inference knowledge storage unit 150.

The probabilistic inference attack logic generation unit 223 receives, through setting means for probabilistic inference attack logic setting items provided to the security administrator terminal unit via the inference logic setting interface unit 210, logical operations and data attributes capable of directly inferring the sensitive information from among the data attributes included in the DBs 40, excluding data attributes corresponding to the sensitive information, receives the probabilistic logic from the probabilistic logic generation unit 221, and generates probabilistic inference attack logic.

The probabilistic inference attack logic may be defined as shown in Mathematical Expression 2 below, and an example of the configuration thereof will be described with reference to FIG. 6, particularly reference numeral 501. [Mathematical Expression 2] $A = \left\{\left.{α}_{x}\right|x=1,..n\right\}$

Here, *αₓ* denotes probabilistic inference attack logic, and *A* denotes a set of probabilistic inference attack logic *αₓ*.

The probabilistic inference attack logic *αₓ* includes one or more data attributes, one or more probabilistic models, and probabilistic logic generated based on the data attributes and the probabilistic models.

Reference numeral 501 in FIG. 6 illustrates probabilistic inference attack logic *αₓ* including only probabilistic logic in the DB configuration example shown in FIG. 5.

Reference numeral 501 in FIG. 6 illustrates inference attack elements composed of the data attributes "patient", "sex", "age", "familyHistory", "smoke", and "helicobacter", which are data attributes capable of directly inferring the names of patients having cancer, assuming that the names of patients having cancer constitute the sensitive information.

In addition, reference numeral 501 in FIG. 6 illustrates probabilistic inference attack logic in which the probabilistic logic received from the probabilistic logic generation unit 221 is applied such that "male" is used as an inference attack element instead of "sex", and "morethan60" is used as an inference attack element instead of "age". That is, in the example of reference numeral 501 in FIG. 6, the probabilistic inference attack logic *α_{w}* and *αₓ* may be expressed as shown in Mathematical Expression 3 below. [Mathematical Expression 3] $\begin{matrix}{α}_{w} = patient \left(U\right) ∧ male \left(V\right) ∧ morethan 60 \left(W\right) ∧ familyHistory \left(X\right) \\ ∧ smoke \left(Y\right) ∧ helicobacter \left(Z\right) \\ {α}_{x} = male \left(V\right) ∧ morethan 60 \left(W\right) ∧ familyHistory \left(X\right) \\ ∧ smoke \left(Y\right) ∧ helicobacter \left(Z\right)\end{matrix}$

Here, *α_{w}* denotes a previous probabilistic inference attack logic, and *αₓ* denotes a subsequent probabilistic inference attack logic of *α_{w}.*

More specifically, the probabilistic inference attack logic *α_{w}* of Mathematical Expression 3 represents an inference attack capable of inferring that a patient U, who is male, 60 years of age or older, has a family history of cancer, smokes, and is infected with Helicobacter, is a patient having stomach cancer.

The probabilistic inference attack logic generation unit 223 generates the probabilistic inference attack logic *α_{w}* and stores the generated probabilistic inference attack logic in the inference knowledge storage unit 150 as inference knowledge.

Here, it is assumed that an additional restriction is imposed so that information on the data attribute "patient", which is identifying information, cannot be obtained. Accordingly, the probabilistic inference attack logic *αₓ* of Mathematical Expression 3, which does not include the restricted data attribute "patient", may be generated and stored in the inference knowledge storage unit 150 as inference knowledge. Since the data attribute "patient" is thus restricted, the valid inference attack elements included in the probabilistic inference attack logic *α_{w}* and *αₓ* are the same five data attributes, namely, "male", "morethan60", "familyHistory", "smoke", and "helicobacter". Accordingly, the following description will be made based on the probabilistic inference attack logic *αₓ*.

Since the inquirer cannot directly obtain information on the data attributes "patient" and "cancer" shown in FIG. 5, the inquirer cannot accurately infer whether a particular patient has cancer solely by using the probabilistic inference attack logic *αₓ*. That is, the information on "male", "morethan60", "familyHistory", "smoke", and "helicobacter" alone is insufficient to determine whether a particular individual has cancer.

Referring to FIG. 5 as an example, records 1, 3, 6, and 8 of the table 401 correspond to patients having stomach cancer. When an information acquirer obtains information on the inference attack elements constituting the probabilistic inference attack logic *αₓ*, namely, male(V), morethan60(W), familyHistory(X), smoke(Y), and helicobacter(Z), the information acquirer may infer that there is a patient having stomach cancer. However, since the data attribute "patient" is restricted as sensitive information, the information acquirer cannot identify the name of the patient having stomach cancer.

Accordingly, in order to accurately identify and infer a patient having cancer, the information acquirer will attempt to identify other inference attack elements not included in the probabilistic inference attack logic *αₓ* and use them to infer the patient having cancer.

For example, when the information acquirer knows, or obtains from another information source, that a 65-year-old woman named Mary lives in Los Angeles and is single, the information acquirer may additionally obtain information on address ("addr") and marital status ("maritalStatus") in addition to the probabilistic inference attack logic *αₓ*, thereby inferring that record 1 in FIG. 5 corresponds to Mary. That is, it becomes possible to infer that Mary is a patient having stomach cancer.

At this time, the information acquirer may infer that record 1 in FIG. 5 corresponds to Mary based on the information on "sex" and "age". However, since record 2 in FIG. 5 also has the same "sex" and "age" as Mary in record 1, information on address ("addr") and marital status ("maritalStatus") is additionally required, as described above, to determine whether Mary or Jane is the patient having stomach cancer.

As another example, when the information acquirer knows, or obtains from another information source, that a 70-year-old man named Brandon lives in San Diego and is married, the information acquirer may additionally obtain information on address ("addr") and marital status ("maritalStatus"), thereby determining that record 8 in FIG. 5 corresponds to Brandon. Accordingly, it becomes possible to infer that Brandon is a patient having stomach cancer.

Accordingly, the inferable logic generation unit 222 generates inferable logic *cₓ* by receiving, from the security administrator terminal unit through the inference logic setting interface unit 210, one or more data attributes that are determined to be usable for improving the accuracy of an inference attack on the sensitive information in the DB 40. The inferable logic may be defined as shown in Mathematical Expression 4 below, and an exemplary configuration thereof will be described with reference to the example indicated by reference numeral 502 in FIG. 6. [Mathematical Expression 4] $C = \left\{\left.{c}_{x}\right|x=1,..n\right\}$

Here, *cₓ* denotes inferable logic determined to be usable for improving the accuracy of an inference attack on the sensitive information, and *C* denotes a set of inferable logic.

Reference numeral 502 in FIG. 6 illustrates inferable logic *cₓ* in the DB configuration example shown in FIG. 5. Assuming that the names of patients having cancer constitute the sensitive information, the inferable logic is composed of the data attributes address (addr(A)) and marital status (maritalStatus(B)), which may be used to infer the names of patients having cancer. That is, in the example of reference numeral 502 in FIG. 6, the inferable logic *cₓ* may be expressed as shown in Mathematical Expression 5 below. [Mathematical Expression 5] ${c}_{x} = addr \left(A\right) ∧ maritalStatus \left(B\right)$

Here, *A* denotes address information, and *B* denotes marital status information.

Accordingly, when the inferable logic has been generated, the inferable logic generation unit 222 outputs the inferable logic *cₓ* to the probabilistic inference attack logic generation unit 223.

The probabilistic inference attack logic generation unit 223 receives the probabilistic logic from the probabilistic logic generation unit 221 and the inferable logic from the inferable logic generation unit 222, generates probabilistic inference attack logic including the probabilistic logic and the inferable logic, and outputs the generated probabilistic inference attack logic. That is, the probabilistic inference attack logic generation unit 223 applies the inferable logic to the probabilistic inference attack logic *α_{w}* and *αₓ*, which include only probabilistic logic as shown by reference numeral 501 in FIG. 6, thereby generating the expanded inference attack logic *α_{w}* and *αₓ* shown by reference numeral 503 in FIG. 6 and expressed by Mathematical Expression 6 below, and stores the generated probabilistic inference attack logic in the inference knowledge storage unit 150. [Mathematical Expression 6] $\begin{matrix}{α}_{w} = patient \left(U\right) ∧ addr \left(A\right) ∧ maritalStatus \left(B\right) ∧ male \left(V\right) ∧ morethan 60 \left(W\right) \\ ∧ familyHistory \left(X\right) ∧ smoke \left(Y\right) ∧ helicobacter \left(Z\right) \\ {α}_{x} = addr \left(A\right) ∧ maritalStatus \left(B\right) ∧ male \left(V\right) ∧ morethan 60 \left(W\right) ∧ familyHistory \left(X\right) \\ ∧ smoke \left(Y\right) ∧ helicobacter \left(Z\right)\end{matrix}$

The inference attack element generation unit 230 receives probabilistic inference attack logic including one or both of the probabilistic inference attack logic *αₓ* and the inferable logic *cₓ* generated by the inference logic generation unit 220, and, as shown in FIG. 6, designates the data attributes included in the probabilistic inference attack logic as inference attack elements.

The inference attack element generation unit 230 provides an inference attack element set *E*, which is information on the designated inference attack elements, to the inference attack element extraction units 120. According to an embodiment, the inference attack element set *E* may be provided to the security administrator terminal unit through the inference logic setting interface unit 210. The inference attack element set *E* may be expressed as shown in Mathematical Expression 7 below. [Mathematical Expression 7] $E = \left\{\left.{e}_{i}\right|i=1,..n\right\}$

Here, *eᵢ* denotes an inference attack element, and *E* denotes a set of inference attack elements.

Referring to FIG. 7 as an example, *e*₁ = patient, *e*₂ = addr, *e*₃ = maritalStatus, *eᵢ* = morethan60, *eⱼ* = male, *eₖ* = familyHistory, *eₗ* = smoke, and *eₘ* = helicobacter.

The sensitive inference attack subset setting unit 240 establishes a sensitive inference attack subset *sₓ* composed of one or more inference attack elements that have a greater influence than other inference attack elements on inferring sensitive information based on the probabilistic logic. The inference attack elements constituting the sensitive inference attack subset *sₓ* may include, for example, "familyHistory" and "helicobacter" in the table 401 of FIG. 5.

The threshold setting unit 250 provides threshold setting means to the security administrator terminal unit and receives and establishes, through the threshold setting means, a risk determination threshold *λ*, a sensitive inference attack element threshold *ρₓ*, and an inferable logic threshold *τ*.

The risk determination threshold *λ* is a threshold for determining whether an inference attack is successful with respect to inference attack elements extracted from result data received from the DBMS 30, and is set to a real number between 0 and 1, that is, a probability value. According to one embodiment, the risk determination threshold *λ* may be set to 0.5 (50%), and is used to detect and control inference attack elements such that a probability calculated based on the probabilistic inference attack logic *αₓ* does not exceed 50%.

The risk determination threshold may be defined as shown in Mathematical Expression 8 below. [Mathematical Expression 8] $λ = \left\{\left.real number k\right|0\leq k\leq 1\right\}$

A sensitive inference attack element is an inference attack element that has a greater influence than other inference attack elements on inferring "cancer", which has been predefined as sensitive information, based on the probabilistic logic. A subset composed of such sensitive inference attack elements is referred to as a sensitive inference attack subset *sₓ*.

When "familyHistory" (*eₖ*) and "helicobacter" (*eₘ*) are designated as the sensitive inference attack elements among the inference attack elements shown in FIG. 7, the sensitive inference attack elements, the sensitive inference attack subset *sₓ*, and the sensitive inference attack element threshold *ρₓ* are defined as shown in Table 4 below, and the sensitive inference attack element threshold *ρₓ* may be expressed as shown in Mathematical Expression 9 below.

**[Table 4]**

| Identifier | Sensitive Inference Attack Subset (*sₓ*) | Sensitive Inference Attack Element Threshold (*ρₓ*) |
|---|---|---|
| ⋮ | ⋮ | ⋮ |
| *x* | {*eₖ*, *eₘ*} | 1 |
| ⋮ | | ⋮ |

[Mathematical Expression 9] ${ρ}_{x} = \left\{\left.integer k\right|0\leq k\leq len\left({s}_{k}\right)\right\}$

Here, len(*sₓ*) denotes a function that returns the number of elements in the sensitive inference attack subset *sₓ*.

That is, the sensitive inference attack element threshold *ρₓ* is set to an integer value of one or greater that is less than or equal to the number of elements in the sensitive inference attack subset *sₓ*.

When it is determined that an inference attack corresponding to the sensitive inference attack subset *sₓ* has occurred, the sensitive inference attack element threshold *ρₓ* is used to prevent the inference attack from succeeding by restricting disclosure of information on a number of inference attack elements corresponding to the threshold among the inference attack elements constituting the sensitive inference attack subset *sₓ*.

For example, it is assumed that the sensitive inference attack element threshold *ρₓ* is set to 1, and that the sensitive inference attack subset is *sₓ* = {*eₖ, eₘ*} = {familyHistory, helicobacter}. Since len(*sₓ*) = 2, the inference attack is prevented from succeeding by restricting disclosure of information corresponding to one of the two inference attack elements, *eₖ* and *eₘ,* constituting the sensitive inference attack subset.

The inference attack element corresponding to the sensitive inference attack element threshold *ρₓ* may be selected in chronological order from the earliest input time, in reverse chronological order from the latest input time, or randomly, and the selected inference attack element is subjected to restriction processing.

In addition, the threshold setting unit 250 receives, from the security administrator, an inferable logic threshold *τ* for inference attack elements to be subjected to restriction processing among the inference attack elements extracted from result data received from the DBMS 30, and stores and establishes the inferable logic threshold *τ* in the inference knowledge storage unit 150.

The inferable logic threshold *τ* is defined as shown in Mathematical Expression 10 below. [Mathematical Expression 10] $τ = \left\{\left.k\right|0≦k≦len\left({c}_{x}\right)\right\}$

Here, *cₓ* denotes inferable logic, and len(*cₓ*) denotes a function that returns the number of elements in the inferable logic.

As shown in Mathematical Expression 10, the inferable logic threshold *τ* is set to an integer value of zero or greater that is less than or equal to the number of elements in the inferable logic subset *cₓ*. Accordingly, when the inferable logic threshold *τ* is set to 0, no restriction processing is applied to inference attack elements based on the inferable logic *cₓ*.

When it is determined that the inference attack elements constituting the inferable logic are included among the inference attack elements extracted from the result data, the inferable logic threshold *τ* is used to prevent disclosure of information on inference attack elements corresponding to the inferable logic threshold *τ* among the inference attack elements constituting the inferable logic. The inference attack element corresponding to the inferable logic threshold *τ* may be selected in chronological order from the earliest input time, in reverse chronological order from the latest input time, or randomly, and the selected inference attack element is subjected to restriction processing.

As described above, the risk determination threshold *λ* is required to be established, whereas the sensitive inference attack element threshold *ρₓ* and the inferable logic threshold *τ* may not be established, only one of them may be established, or both the sensitive inference attack element threshold *ρₓ* and the inferable logic threshold *τ* may be established in combination. Accordingly, by appropriately combining these three thresholds and applying restriction processing, it is possible to prevent sensitive information from being disclosed through inference attacks while improving data usability.

The security administrator may access the inference logic setting interface unit 210 through the security administrator terminal unit to add, delete, or modify the aforementioned probabilistic model, probabilistic logic, probabilistic inference attack logic, and inferable logic. The security administrator may also add, delete, or modify thresholds, and further change the values of the respective thresholds.

As shown in FIG. 3, the inference attack element extraction unit 120 receives and establishes the inference attack element set *E* from the inference setting unit 110, receives result data *r*_{(*u*,*p*,*q*)}, which is search result data for a query issued by an arbitrary inquirer, from the DBMS 30, extracts data attribute information corresponding to the inference attack elements of the inference attack element set from the received result data, generates an inference attack transaction *t*_{(*u*,*p*,*q*)} including the inference attack elements corresponding to the extracted data attributes, and outputs the generated inference attack transaction to the inference attack serialization unit 130. The inference attack transaction is defined as shown in Mathematical Expression 11 below. [Mathematical Expression 11] $\begin{matrix}{t}_{\left(u, p, q\right)} = \left[{ϕ}_{1}, {ϕ}_{2}, …,{ϕ}_{l}\right] \\ {T}_{u} = \left\{\left.{t}_{\left(u, p, q\right)}\right|p=1,…,n, q=1,…,m\right\} \\ Tset = \left\{{T}_{u}\right\}\end{matrix}$

Here, *t*_{(*u*,*p*,*q*)} denotes the *q*-th inference attack transaction of DBMSₚ for an arbitrary inquirer *u*, and is composed of a set of inference attack elements *φₓ*. *φₓ* denotes an inference attack element included in the *q*-th inference attack transaction *t*_{(*u*,*p*,*q*)} of DBMSₚ for the arbitrary inquirer *u*, and belongs to the inference attack element set *E*. That is, each *φₓ* is mapped to a corresponding *eᵢ* (*eᵢ* ∈ *E*). The inference attack elements *φₓ* are ordered according to, for example, retrieval order, positional order, or chronological order. Thus, for times *y* and *z*, if *y* < *z*, the inference attack element *φ_{y}* precedes the inference attack element *φ_{z}*. *Tₛₑₜ* denotes the set of all inference attack transactions attempted by all inquirers and is composed of the sets *Tᵤ*. *Tᵤ* denotes the inference attack transaction set for an arbitrary inquirer *u* and is composed of the transactions *t*_{(*u*,*p*,*q*)}.

The inference attack transaction obtained by serializing the extracted inference attack elements may be defined as shown in Mathematical Expression 12 below. [Mathematical Expression 12] $\begin{matrix}\vec{{t}_{x}} ∈ \left\{{t}_{\left(u, p, q\right)}\right\} ⊆ \left\{{T}_{u}\right\} \left(where, {T}_{set}=\left\{{T}_{u}\right\}\right) \\ \vec{T} = \left\{\left.\vec{{t}_{x}}\right|x=1,…,n\right\}\end{matrix}$

Here, *t̅ₓ*. denotes a serialized inference attack transaction and is included in the *q*-th inference attack transaction set *Tᵤ* = {*t*_{(*u*,*p*,*q*)}} of DBMSₚ for an arbitrary inquirer *u*. In addition, *̅T̅*̅ denotes a set of *t̅ₓ*, that is, a serialized inference attack transaction set. Accordingly, for two time points *y* and *z*, if *y* < *z*, the serialized inference attack transaction *̅t̅*̅*_{y}* precedes the serialized inference attack transaction *t̅_{z}*.

FIG. 8 illustrates a case in which inference attack elements of first result data (*r*_{(*a,p*1,*q*1)}) and second result data (*r*_{(*b,p*1,*q*2)}), received from the same DBMSₚ₁ by the inference attack element extraction unit 120 for inquirers a and b, respectively, are concurrently received. FIG. 9 illustrates a case in which the inference attack elements are received in parallel. The cases shown in FIGS. 8 and 9 will be described in greater detail below.

In the example of FIG. 8, the inference attack element extraction unit 120 extracts the inference attack elements *eₘ* and *eₖ* from the first result data for inquirer a. The time of the inference attack element *eₘ* (clock(*eₘ*) is Δ₃, and the time of the inference attack element *eₖ* (clock(*eₖ*) is Δ₆. Since Δ₃ < Δ₆, the inference attack element extraction unit 120 orders the inference attack elements such that *eₘ* precedes *eₖ*, thereby constructing the inference attack transaction *t*_{(*a,p*1,*q*1)} ={*φ*₁=*eₘ*, *φ*₂=*eₖ*}=*̅t̅*̅₂.

The inference attack element extraction unit 120 extracts the inference attack elements *eₖ* and *eₘ* from the second result data for inquirer b. The time of the inference attack element *eₖ* (clock(*eₖ*) is Δ₄, and the time of the inference attack element *eₘ* (clock(*eₘ*) is Δ₅. Since Δ₄ < Δ₅, the inference attack element extraction unit 120 orders the inference attack elements such that *eₖ* precedes *eₘ*, thereby constructing the inference attack transaction *t*_{(*b,p*1,*q*2)}={*φ*₁=*eₖ*, *φ*₂=*eₘ*}=*̅t̅*̅₁ and outputs the constructed inference attack transaction to the inference attack serialization unit 130.

Here, the start time of the first result data (clock(*r*_{(*a*,*p*1,*q*1})) is Δ₂, and the start time of the second result data (*clock*(*r*_{(*b,p*1,q2)}) is Δ₁. Since Δ₁ < Δ₂, *̅t̅*̅₁ precedes *̅t̅*̅₂.

Accordingly, the inference attack serialization unit 130 serializes and outputs the inference attack transaction t_{(b,p1,q2)} = {φ₁ = eₖ, φ₂ = eₘ} = *̅t̅*̅₁ followed by the inference attack transaction t_{(*a,p*1,*q*1)} *=* {*φ*₁ = *eₘ, φ*₂ *= eₖ*} *= t̅*₂. That is, *̅t̅*̅₁ precedes *̅t̅*̅₂.

In the example of FIG. 9, since the second result data is also received earlier than the first result data, the inference attack serialization unit 130 likewise serializes and outputs the inference attack transaction *t*_{(*b,p*1*,q*2}) = {*φ*₁ = *eₖ, φ*₂ *= eₘ*} = *̅t̅*̅₁ followed by the inference attack transaction *t*_{(*a,p*1*,q*1}) = {*φ*₁ = *eₘ, φ₂* = *eₖ*} = *t̅₂.*

The inference attack serialization unit 130 serializes the inference attack transactions output from all of the inference attack element extraction units 120 in the manner described above and outputs the serialized inference attack transactions to the probabilistic inference attack detection unit 140.

The mapping between the result data and the corresponding inference attack transaction may be defined as shown in Mathematical Expression 13 below. [Mathematical Expression 13] $\begin{matrix}\cdot R = \left\{\left.{r}_{i}\right|i=1,2,…,n\right\} \\ \cdot {r}_{i} = \left\{\left.{r}_{i , j}\right|j=1,2,…,m\right\} \\ \cdot {\vec{t}}_{i} = \left\{\left.{\vec{t}}_{i , j}\right|j=1,2,…,m\right\} ∈ \vec{T} , where \vec{T} = \left\{\left.{\vec{t}}_{i}\right|i=1,2,…,n\right\} \\ \cdot \left\{\left[{\vec{t}}_{i}\right]\right\} = \left\{\left[{r}_{i}\right]\right\} , \left\{\left[{\vec{t}}_{i , j}\right]\right\} = \left\{\left[{r}_{i , j}\right]\right\}\end{matrix}$

Here, *r_{i,j}* denotes a result data record, *rᵢ* denotes result data composed of *m* result data records (*r_{i,j}*), and *R* denotes a result data set composed of *n* result data (*rᵢ*). Further, *t̅_{i,j}* denotes a serialized inference attack transaction record. According to Mathematical Expression 12, *t̅ᵢ* denotes a serialized inference attack transaction composed of *m* serialized inference attack transaction records (*t̅_{i,j}),* and *̅T̅*̅ denotes a serialized inference attack transaction set composed of n serialized inference attack transactions (*t̅ᵢ*).

Further, the inference attack transaction *t̅ᵢ* is defined to correspond to the result data *rᵢ*, and the inference attack element set {[*̅t̅*̅_{*i*]}} of the inference attack transaction *t̅ᵢ* is identical to the inference attack element set {[*rᵢ*]} of the result data *rᵢ*. Accordingly, the inference attack transaction record *t̅_{i,j}* corresponds to the result data record *r_{i,j},* and the inference attack element set {[*̅t̅*̅_{*i*,*j*}]} of the inference attack transaction record *t̅_{i,j}* is identical to the inference attack element set {[*r_{i,j}*]}of the result data record *r_{i,j}.*

The probabilistic inference attack detection unit 140 constructs an inference attack element test set, which is an inference attack element set including the inference attack elements contained in the inference attack transaction received from the inference attack serialization unit 130, together with inference attack elements previously provided to the inquirer terminal unit and stored in the inference knowledge storage unit 150.

The probabilistic inference attack detection unit 140 determines inference attack elements to be restricted based on the sensitive inference attack subset (*sₓ*) and the sensitive inference attack element threshold (*ρₓ*) using the inference attack element test set.

The determination of the inference attack elements to be restricted based on the sensitive inference attack subset (*sₓ*) and the sensitive inference attack element threshold (*pₓ*) is performed as shown in Mathematical Expression 14 below.

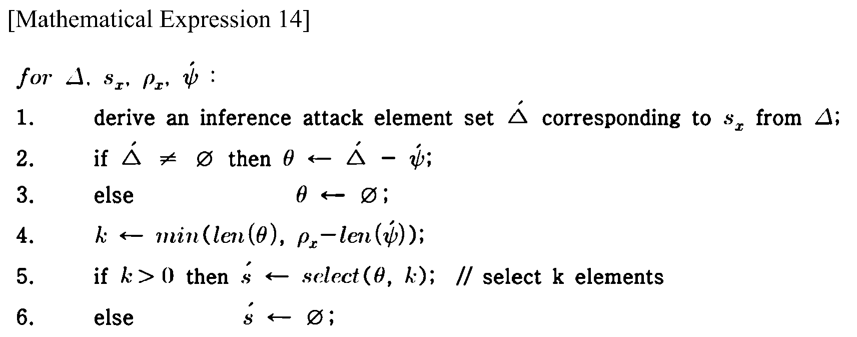

Here, the input parameters are an inference attack element test set Δ including a previously provided inference attack element set and an inference attack transaction, a sensitive inference attack subset *sₓ*, a sensitive inference attack element threshold *ρₓ*, and a set of previously restricted sensitive inference attack elements *ψ́*.

After the parameters are received, a set of inference attack elements Δ́ corresponding to the sensitive inference attack subset *sₓ* is derived from the inference attack element test set Δ (line 1). When the derived inference attack element set Δ́ is not an empty set, that is, when the sensitive inference attack subset *sₓ* is formed in the inference attack element test set Δ, an inference attack element set *θ* is derived by removing the previously restricted sensitive inference attack element set ψ́ from the derived inference attack element set Δ́ (line 2). When the derived inference attack element set Δ́ is an empty set, that is, when the sensitive inference attack subset *sₓ* is not formed in the inference attack element test set Δ, the inference attack element set *θ* is set to an empty set (line 3). A number *k* of inference attack elements to be newly determined for restriction processing is determined from the derived inference attack element set *θ* (line 4). When k is a positive value, an inference attack element set ś including k inference attack elements selected from the inference attack element set *θ* is derived (line 5); otherwise, the inference attack element set *ś* is set to an empty set (line 6).

In addition to the sensitive inference attack elements determined to be restricted based on Mathematical Expression 14, inference attack elements to be restricted for each inference attack transaction record are determined as shown in Mathematical Expression 15 below.

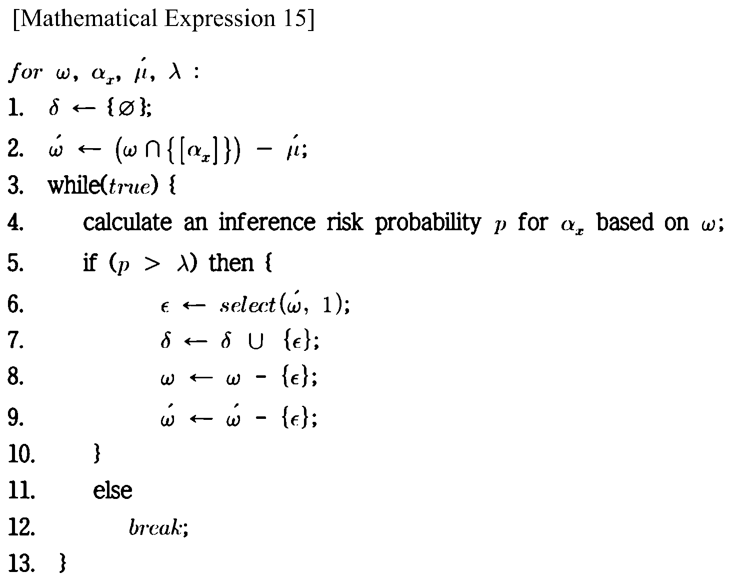

Here, the input parameters are an inference attack element test set *ω* obtained by removing a set *µ́* of sensitive inference attack elements to be restricted from an inference attack transaction record constituting an inference attack transaction, probabilistic inference attack logic *αₓ*, the set ***µ́*** of sensitive inference attack elements to be restricted for the inference attack transaction record, and a risk determination threshold *λ*.

After the parameters are received, a set *δ* representing inference attack elements newly determined to be restricted for the inference attack transaction record is initialized to an empty set (line 1). An inference attack element evaluation candidate set *ώ* is derived by removing the set ***µ́*** of sensitive inference attack elements to be restricted from inference attack elements common to both the inference attack element test set *ω* and the probabilistic inference attack logic *αₓ* (*ω*∩{[*αₓ*]}) (line 2). An inference risk probability *p* for the probabilistic inference attack logic *αₓ* is calculated based on the inference attack element test set *ω* (line 4), and it is determined whether the calculated inference risk probability *p* exceeds the risk determination threshold *λ* (line 5). When the inference risk probability *p* exceeds the risk determination threshold *λ*, one inference attack element *ε* to be newly restricted is selected from the inference attack element evaluation candidate set *ώ* (line 6), the selected inference attack element *ε* is added to the set *δ* of inference attack elements determined to be restricted to update the set *δ* (line 7), and the selected inference attack element *ε* is removed from each of the inference attack element test set *ω* and the inference attack element evaluation candidate set *ώ* to update the respective sets (lines 8 and 9). Lines 4 through 10 are repeatedly performed based on the updated inference attack element test set *ω*, and the repetitive processing ends when the inference risk probability *p* calculated based on the updated inference attack element test set *ω* no longer exceeds the risk determination threshold *λ* (line 12).

Based on Mathematical Expressions 14 and 15, the determination of inference attack elements to be restricted for each inference attack transaction record constituting an inference attack transaction and the corresponding restriction processing are performed as shown in Mathematical Expression 16 below.

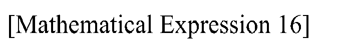

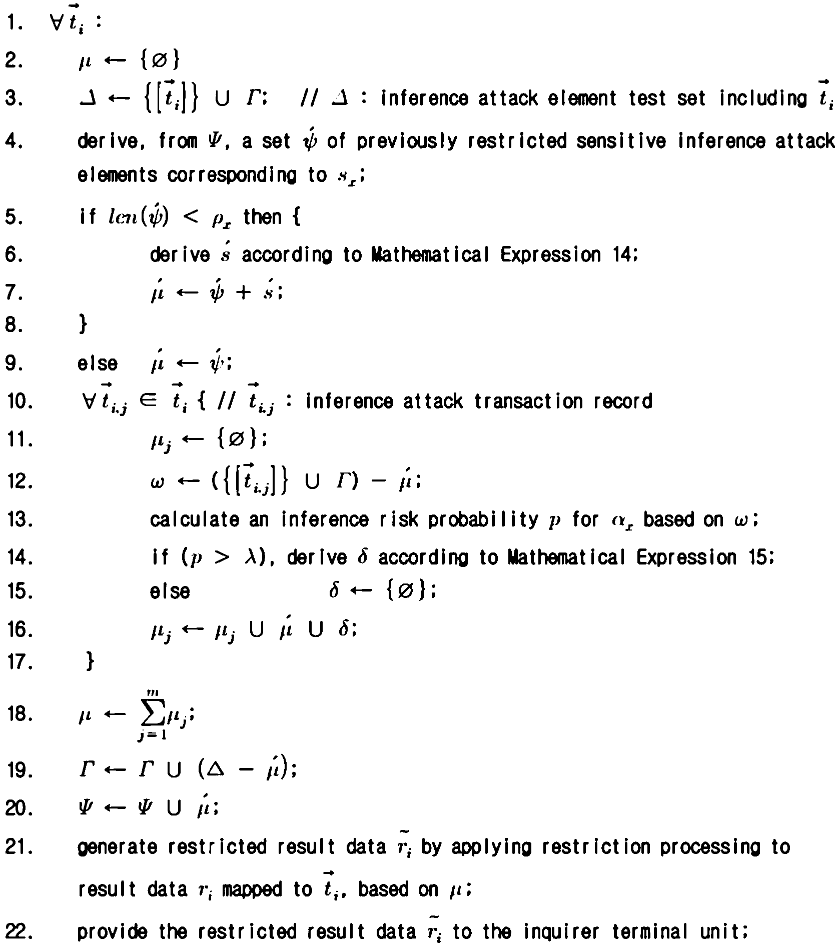

In Mathematical Expression 16, the operations of lines 2 through 21 are performed for each inference attack transaction *t̅ᵢ* (line 1). First, a set *µ* of inference attack elements to be restricted for the inference attack transaction *t̅ᵢ* is initialized (line 2), an inference attack element test set Δ is derived to include the inference attack element set {[*̅t̅*̅_{*i*]}} of the inference attack transaction *t̅ᵢ* and a previously provided inference attack element set *Γ* (line 3), and a previously restricted sensitive inference attack element set *ψ́* corresponding to the sensitive inference attack subset *sₓ* is derived from a previously restricted inference attack element set *̅T̅*̅ (line 4). When the number of inference attack elements in the previously restricted sensitive inference attack element set *ψ́* corresponding to the probabilistic inference attack logic *αₓ* is less than the sensitive inference attack element threshold *ρₓ* (line 5), a set *ś* of sensitive inference attack elements newly determined to be restricted is derived using Mathematical Expression 14 (line 6), and the previously restricted sensitive inference attack element set *ψ́* and the sensitive inference attack element set *ś* newly determined to be restricted are combined to derive a set *µ́* of the sensitive inference attack elements to be restricted (line 7). When the number of inference attack elements in the previously restricted sensitive inference attack element set *ψ́* corresponding to the probabilistic inference attack logic *αₓ* is not less than the sensitive inference attack element threshold *ρₓ*, the set *µ́* of the sensitive inference attack elements to be restricted is updated to the previously restricted sensitive inference attack element set *ψ́* (line 9).

Operations of lines 10 through 15 are performed to determine inference attack elements to be restricted for each inference attack transaction record *t̅_{i,j}* constituting the inference attack transaction *tᵢ*. More specifically, a set *µⱼ* of inference attack elements to be restricted for the inference attack transaction record *t̅_{i,j}* is initialized to an empty set (line 11), and an inference attack element test set *ω* is derived by including the inference attack element set {[*t̅_{i,j}*]} of the inference attack transaction record and the previously provided inference attack element set *Γ* and removing the set ***µ́*** of the sensitive inference attack elements to be restricted therefrom (line 12). That is, an inference risk probability *p* for the probabilistic inference attack logic *αₓ* is calculated based on the inference attack element test set *ω* from which the inference attack elements determined to be restricted according to the sensitive inference attack subset *sₓ* and the sensitive inference attack element threshold *ρₓ* have been excluded (line 13). When the calculated inference risk probability *p* exceeds the risk determination threshold *λ*, the set *δ* of inference attack elements newly determined to be restricted is derived with reference to Mathematical Expression 15 (line 14). When the calculated inference risk probability *p* does not exceed the risk determination threshold *λ*, the inference attack element set *δ* is set to an empty set (line 15). A set *µⱼ* of inference attack elements to be restricted is updated by combining the sensitive inference attack element set ***µ́*** to be restricted and the set *δ* of inference attack elements newly determined to be restricted (line 16).

When the sets *µⱼ* of inference attack elements to be restricted have been derived for all inference attack transaction records *t̅_{i,j}* included in the inference attack transaction *t̅ᵢ*, a set*µ* of inference attack elements to be restricted for the inference attack transaction *t̅ᵢ* is derived (line 18). The previously provided inference attack element set *Γ* is updated by adding inference attack elements obtained by removing the sensitive inference attack element set *µ́* to be restricted from the inference attack element test set Δ (line 19), and the previously restricted inference attack element set *Ψ̅* is updated by adding the sensitive inference attack element set *µ́* to be restricted (line 20). Restricted result data *r̃ᵢ* is generated by restricting result data *rᵢ* mapped to the inference attack transaction *t̅ᵢ* according to the set *µ* of inference attack elements to be restricted (line 21), and the restricted result data *r̃ᵢ* is provided to the inquirer terminal unit (line 22).

Here, according to Mathematical Expression 13, generating the restricted result data *r̃ᵢ* by restricting the result data *rᵢ* mapped to the inference attack transaction *t̅ᵢ* according to the set *µ* of inference attack elements to be restricted corresponds to generating respective restricted result data records *r̃_{i,j}* by restricting each result data record *r_{i,j}* mapped to a corresponding inference attack transaction record *t̅_{i,j}* according to each inference attack element *µⱼ* to be restricted.

As described above, the probabilistic inference attack detection unit 140 first determines whether the sensitive inference attack subset *sₓ* is formed in the inference attack element test set (lines 1 and 2 of Mathematical Expression 14). When the sensitive inference attack subset *sₓ* is formed, the probabilistic inference attack detection unit 140 determines inference attack elements to be restricted according to the sensitive inference attack element threshold *ρₓ* among the threshold information included in the inference knowledge (lines 2, 4, and 5 of Mathematical Expression 14).

The probabilistic inference attack detection unit 140 loads inference knowledge including probabilistic inference attack logic *αₓ*, inferable logic *cₓ,* the sensitive inference attack subset *sₓ*, and threshold information. Based on the loaded inference knowledge, the probabilistic inference attack detection unit 140 calculates an inference risk probability for inferring sensitive information with respect to the probabilistic inference attack logic *αₓ*, based on an inference attack element test set from which inference attack elements to be restricted according to the sensitive inference attack element threshold *ρₓ* have been excluded from the inference attack elements of each inference attack transaction record *t̅_{i,j}* included in an inference attack transaction *t̅ᵢ* received from the inference attack serialization unit 130 (lines 12 and 13 of Mathematical Expression 16), and determines whether the calculated inference risk probability exceeds the predefined risk determination threshold *λ* (line 14 of Mathematical Expression 15).

When the inference risk probability exceeds the predefined risk determination threshold *λ*, the probabilistic inference attack detection unit 140 determines inference attack elements to be restricted, based on an inference attack element test set including the inference attack elements of each inference attack transaction record constituting the inference attack transaction, from among the inference attack elements of each inference attack transaction record other than the inference attack elements of the sensitive inference attack subset *sₓ* and the inferable logic *cₓ* (lines 12 to 14 and 16 of Mathematical Expression 16 and Mathematical Expression 15).

The probabilistic inference attack detection unit 140 also monitors, based on the inference attack element test set, whether the inferable logic *cₓ* is formed and, when the inferable logic is formed, determines inference attack elements to be restricted according to the inferable logic threshold *τ* from among the inference attack elements constituting the inferable logic.

At this time, the probabilistic inference attack detection unit 140 refers to previously restricted inference attack elements stored in the inference knowledge storage unit 150 (line 4 of Mathematical Expression 16) and determines that a previously restricted inference attack element among the inference attack elements corresponding to the sensitive inference attack element threshold *ρₓ* is to be included as an inference attack element to be restricted in result data corresponding to the current inference attack transaction (lines 5 through 7 of Mathematical Expression 16).

More specifically, the probabilistic inference attack detection unit 140 may establish the three thresholds for the restriction processing in combination. When determining whether each threshold is exceeded, the probabilistic inference attack detection unit 140 first determines, according to the sensitive inference attack element threshold *ρₓ*, inference attack elements having relatively high sensitivity as inference attack elements to be restricted (lines 4 through 7 of Mathematical Expression 16). The probabilistic inference attack detection unit 140 then calculates an inference risk probability for the probabilistic inference attack logic *αₓ* based on the inference attack element test set excluding the inference attack elements determined to be restricted according to the sensitive inference attack element threshold *ρₓ* (lines 12 and 13 of Mathematical Expression 16), additionally determines inference attack elements to be restricted when the calculated inference risk probability exceeds the risk determination threshold *λ* (lines 14 and 16 of Mathematical Expression 16), and finally determines inference attack elements to be restricted according to the inferable logic threshold *τ* depending on whether the inferable logic is formed.

Here, an inference attack element determined to be restricted according to the sensitive inference attack element threshold *ρₓ* is stored in the inference knowledge storage unit 150 as a previously restricted inference attack element included in the inference knowledge (line 20 of Mathematical Expression 16). An inference attack element determined to be restricted according to the inferable logic threshold *τ* is also stored in the inference knowledge storage unit 150 as a previously restricted inference attack element included in the inference knowledge.

However, an inference attack element determined to be restricted based on the inference attack element test set (*ω* in line 12 of Mathematical Expression 16) excluding the inference attack elements determined to be restricted according to the sensitive inference attack element threshold *ρₓ*, namely, an inference attack element represented by *δ* in line 14 of Mathematical Expression 16, is applied to restriction processing for the corresponding result data record *r_{i,j}* (lines 16 to 18 and 21 of Mathematical Expression 16), does not affect restriction processing for a next result data record *r*_{*i,j+*1} (lines 11 and 16 of Mathematical Expression 16), and is stored in the inference knowledge storage unit 150 without being stored as a previously restricted inference attack element, thereby preventing any effect on restriction processing for the next result data *r*_{*i+*1} (*i*.e., *δ* is not included in line 20 of Mathematical Expression 16) and improving data usability..

When inference attack elements to be restricted have been determined, the probabilistic inference attack detection unit 140 outputs restriction request information including information on the inference attack elements to be restricted to the probabilistic inference attack control unit 160.

The probabilistic inference attack control unit 160 receives, from the probabilistic inference attack detection unit 140, information on inference attack elements to be restricted with respect to result data, restricts data attribute information corresponding to the inference attack elements to be restricted in the result data received from the DBMS 30, and outputs the restricted result data through the input/output unit 10.

In one example, it is assumed that a query <familyHistory, smoke, helicobacter, sex, age, maritalStatus, addr> is executed on the DB shown in FIG. 5, the risk determination threshold *λ* is 0.5, the sensitive inference attack subset *sₓ* is *sₓ*={*eₖ, eₘ*}={familyHistory, helicobacter}, the sensitive inference attack element threshold *ρₓ* is 1, and the inferable logic threshold r is 1.

The result data retrieved in response to the query <familyHistory, smoke, helicobacter, sex, age, maritalStatus, addr> and subjected to restriction processing is shown in Table 5 below. Here, the symbol * denotes masked or undisclosed information.

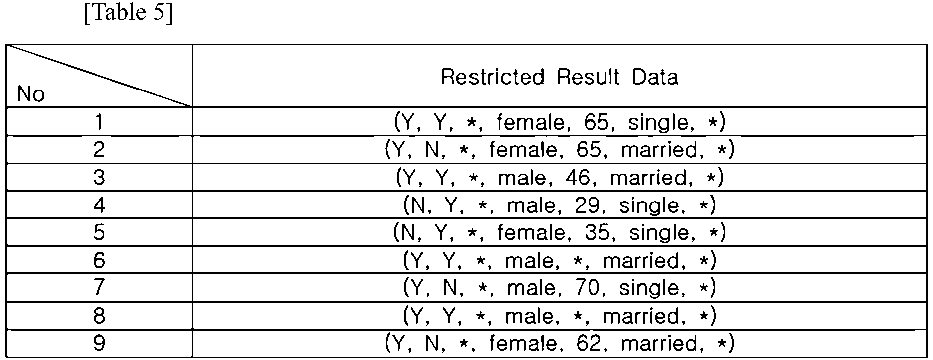

Taking record 1 of FIG. 5 as an example, the probabilistic inference attack detection unit 140 determines whether the sensitive inference attack subset *sₓ* exists in the inference attack element test set for the result data. Since the inference attack elements constituting record 1 are included in the inference attack element test set, it is determined that the sensitive inference attack subset *s*_{*x*=}{*eₖ, eₘ*}={familyHistory, helicobacter}, as defined in the example of Table 4, exists. Since the sensitive inference attack element threshold *ρₓ* is 1, the probabilistic inference attack detection unit 140 determines one of the sensitive inference attack elements of the sensitive inference attack subset *sₓ*={familyHistory, helicobacter} as an inference attack element to be restricted. The restricted sensitive inference attack element "helicobacter" is stored in the inference knowledge storage unit 150 as a previously restricted sensitive inference attack element. The inference attack element test set includes not only inference attack elements of the current query but also inference attack elements provided in response to previous queries.

Next, the probabilistic inference attack detection unit 140 calculates an inference risk probability for record 1 of FIG. 5 using the probabilistic logic of Table 2 and the conditional probability table for the respective data attributes shown in Table 3. For record 1 of FIG. 5, the inference risk probability may be expressed as shown in Mathematical Expression 17 below. Here, Mathematical Expression 17 indicates that the inference risk probability is calculated without considering the inference attack element "helicobacter", which is restricted according to the sensitive inference attack element threshold *ρₓ* = 1. Record 1 of Table 5 illustrates an example in which "helicobacter" is restricted. [Mathematical Expression 17] $\begin{matrix}inference risk probability = \\ \frac{\begin{matrix}P \left(\left.cancer\left(X\right)\right|patient\left(X\right)∧familyHistory\left(X\right)∧smoke\left(X\right)∧helicobacter\left(X\right)∧morethan60\left(X\right)\right) \\ - P \left(\left.cancer\left(X\right)\right|∼patient\left(X\right)∧∼familyHistory\left(X\right)∧∼smoke\left(X\right)∧helicobacter\left(X\right)\right)\end{matrix}}{1 - P \left(\left.cancer\left(X\right)\right|∼patient\left(X\right)∧∼familyHistory\left(X\right)∧∼smoke\left(X\right)∧helicobacter\left(X\right)\right)}\end{matrix}$

Referring to Table 2,
*P*(cancer(*X*)|patient(*X*)∧familyHistory(*X*)∧smoke(*X*)∧helicobacter(*X*)∧morethan60(*X*))=0.53, and referring to Table 3,
*P*(cancer(*X*)|~patient(*X*)∧~familyHistory(*X*)∧~smoke(*X*)∧helicobacter(*X*))=0.1857. Accordingly, the inference risk probability is calculated as ((0.53)-(0.1857))/(1-0.1857)=0.4228, that is, 42.28%.

Since the calculated inference risk probability does not exceed 50%, which is the value of the risk determination threshold *λ*, the probabilistic inference attack detection unit 140 does not additionally determine an inference attack element to be restricted according to the inference risk probability.

The probabilistic inference attack detection unit 140 also determines whether the inferable logic *cₓ*={maritalStatus, addr} is formed in the inference attack element test set. Since the inferable logic is formed, the probabilistic inference attack detection unit 140 determines one of "maritalStatus" and "addr", which are inference attack elements constituting the inferable logic, as an inference attack element to be restricted because the inferable logic threshold *τ* is set to 1. Record 1 of Table 5 illustrates an example in which "addr" is restricted.

As another embodiment, taking record 6 of FIG. 5 as an example, since the inference attack elements contained in the result data include all of the sensitive inference attack elements of the sensitive inference attack subset *sₓ*={familyHistory, helicobacter}, the probabilistic inference attack detection unit 140 determines one of the sensitive inference attack elements as an inference attack element to be restricted because the sensitive inference attack element threshold *ρₓ* is set to 1. At this time, with reference to previously restricted inference attack elements stored in the inference knowledge storage unit 150, the probabilistic inference attack detection unit 140 determines "helicobacter", which is a previously restricted sensitive inference attack element, as an inference attack element to be restricted. Record 6 of Table 5 illustrates an example in which "helicobacter" is restricted.

The probabilistic inference attack detection unit 140 also calculates an inference risk probability for record 6 of FIG. 5 as shown in Mathematical Expression 18 below and determines whether the inference risk probability exceeds the risk determination threshold of 50%. Here, the inference risk probability is calculated without considering the inference attack element "helicobacter", which is the inference attack element determined to be restricted according to the sensitive inference attack element threshold *ρₓ*=1. [Mathematical Expression 18] $\begin{matrix}inference risk probability = \\ \frac{\begin{matrix}P \left(\left.cancer\left(X\right)\right|patient\left(X\right)∧familyHistory\left(X\right)∧smoke\left(X\right)∧helicobacter\left(X\right)∧morethan60\left(X\right)∧male\left(X\right)\right) \\ - P \left(\left.cancer\left(X\right)\right|∼patient\left(X\right)∧∼familyHistory\left(X\right)∧∼smoke\left(X\right)∧helicobacter\left(X\right)\right)\end{matrix}}{1 - P \left(\left.cancer\left(X\right)\right|∼patient\left(X\right)∧∼familyHistory\left(X\right)∧∼smoke\left(X\right)∧helicobacter\left(X\right)\right)}\end{matrix}$

More specifically, referring to Table 2,
*P*(cancer(*X*)|patient(*X*)∧familyHistory(*X*)∧smoke(*X*)Λhelicobacter(*X*)Λmorethan60(*X*)∧male( *X*))=0.6, and referring to Table 3,
*P*(cancer(*X*)|~patient(*X*)∧~familyHistory(*X*)∧~smoke(*X*)∧helicobacter(*X*))=0.1857.
Accordingly, the inference risk probability for record 6 of FIG. 5 is calculated as ((0.6)-(0.1857))/(1-0.1857)=0.5088, that is, 50.88%.

Since the calculated inference risk probability exceeds the risk determination threshold of 50%, the probabilistic inference attack detection unit 140 determines one of "male" and "morethan60" as an inference attack element to be restricted, other than the sensitive inference attack elements and the inference attack elements of the inferable logic. Record 6 of Table 5 illustrates an example in which "morethan60" is determined as the inference attack element to be restricted.

The probabilistic inference attack detection unit 140 recalculates the inference risk probability for record 6 as shown in Mathematical Expression 19 below and determines whether the inference risk probability exceeds the risk determination threshold of 50%. Thus, the inference risk probability is calculated without considering "morethan60", while "helicobacter" remains excluded as an inference attack element previously determined to be restricted. [Mathematical Expression 19] $\begin{matrix}inference risk probability = \\ \frac{\begin{matrix}P \left(\left.cancer\left(X\right)\right|patient\left(X\right)∧familyHistory\left(X\right)∧smoke\left(X\right)∧morethan60\left(X\right)∧male\left(X\right)\right) \\ - P \left(\left.cancer\left(X\right)\right|∼patient\left(X\right)∧∼familyHistory\left(X\right)∧∼smoke\left(X\right)∧helicobacter\left(X\right)∧morethan60\left(X\right)\right)\end{matrix}}{1 - P \left(\left.cancer\left(X\right)\right|∼patient\left(X\right)∧∼familyHistory\left(X\right)∧∼smoke\left(X\right)∧helicobacter\left(X\right)∧morethan60\left(X\right)\right)}\end{matrix}$

Referring to Table 3,
*P*(cancer(*X*)|~patient(*X*)∧~familyHistory(*X*)∧~smoke(*X*)∧~helicobacter(*X*)∧morethan60(*X*))= 0.1754. Accordingly, the inference risk probability is ((0.5088)-(0.1754))/(1-0.1754)=0.4043 (40.43%), which does not exceed the risk determination threshold of 50%, and thus the probabilistic inference attack detection unit 140 does not additionally determine an inference attack element to be restricted according to the inference risk probability.

In addition, since the inferable logic threshold *τ* is set to 1, the probabilistic inference attack detection unit 140 determines "addr" as an inference attack element to be restricted from among "maritalStatus" and "addr", which constitute the inferable logic, in the same manner as previously determined in the embodiment of record 1. Record 6 of Table 5 also illustrates an example in which "addr" is restricted.

As yet another embodiment, taking record 8 of FIG. 5 as an example, since the inference attack elements included in the result data include all of the sensitive inference attack elements of the sensitive inference attack subset *sₓ*={familyHistory, helicobacter}, the probabilistic inference attack detection unit 140 determines one of the sensitive inference attack elements as an inference attack element to be restricted because the sensitive inference attack element threshold *ρₓ* is set to 1. At this time, with reference to previously restricted inference attack elements stored in the inference knowledge storage unit 150, the probabilistic inference attack detection unit 140 determines "helicobacter", a previously restricted sensitive inference attack element, as an inference attack element to be restricted. Record 8 of Table 5 also illustrates an example in which "helicobacter" is restricted.

The probabilistic inference attack detection unit 140 also calculates an inference risk probability for record 8 of FIG. 5 according to Mathematical Expression 18 and determines whether the inference risk probability exceeds the risk determination threshold of 50%. Here, the inference risk probability is calculated without considering "helicobacter", which is the inference attack element determined to be restricted according to the sensitive inference attack element threshold *ρₓ*=1.

Accordingly, referring to Table 2,
*P*(cancer(*X*)|patient(*X*)∧familyHistory(*X*)∧smoke(*X*)∧helicobacter(*X*)∧morethan60(*X*)∧male( *X*))=0.6, and referring to Table 3,
*P*(cancer(*X*)|~patient(*X*)∧~familyHistory(*X*)∧~smoke(*X*)∧helicobacter(*X*))=0.1857.
Therefore, the inference risk probability for record 8 of FIG. 5 is calculated as ((0.6)-(0.1857))/(1-0.1857)=0.5088, that is, 50.88%.

Since the calculated inference risk probability exceeds the risk determination threshold of 50%, the probabilistic inference attack detection unit 140 additionally determines one of "male" and "morethan60" as an inference attack element to be restricted, other than the sensitive inference attack elements and the inference attack elements of the inferable logic. Record 8 of Table 5 illustrates an example in which "morethan60" is determined as the inference attack element to be restricted.

The probabilistic inference attack detection unit 140 recalculates the inference risk probability for record 8 of FIG. 5 according to Mathematical Expression 19 and determines whether the inference risk probability exceeds the risk determination threshold of 50%. More specifically, after "morethan60" is additionally restricted, the inference risk probability for record 8 of FIG. 5 is calculated with reference to Table 3 as 0.4043 (40.43%), which does not exceed the risk determination threshold of 50%. Accordingly, the probabilistic inference attack detection unit 140 does not additionally determine any further inference attack element to be restricted according to the inference risk probability.

In addition, since the inferable logic threshold *τ* is set to 1, the probabilistic inference attack detection unit 140 determines "addr" as an inference attack element to be restricted from among "maritalStatus" and "addr", which constitute the inferable logic, in the same manner as previously determined in the embodiments of records 1 and 6. Record 8 of Table 5 also illustrates an example in which "addr" is restricted.

As shown in Table 5, the probabilistic inference attack control unit 160 restricts data attribute information corresponding to inference attack elements determined to be restricted among the inference attack elements included in the result data, and outputs the restricted result data.

It will be apparent that inference control is performed as described above for inference attack transactions *t*_{*(a,p*1,*q*1)} and *t*_{*(b,p*2,*q*2)} generated from different DBMSs, DBMSₚ₁ and DBMSₚ₂, respectively, and result data *r*_{*(a,p*1,*q*1)} and *r*_{*(b,p*2,*q*2)}, as in FIGS. 8 and 9. It will also be apparent that inference control is performed as described above for inference attack transactions *t*_{*(a,p*1,*q*1)} and *t*_{*(a,p*2,*q*2)} generated from the different DBMSs, DBMSₚ₁ and DBMSₚ₂, for the same user *a*, and result data *r*_{*(a,p*1,*q*1)} and *r*_{*(a,p*2,*q*2)}.

The probabilistic inference attack detection unit 140 stores inference attack elements determined to be restricted and inference attack elements to be provided in the inference knowledge storage unit 150 as inference knowledge. However, as described above, an inference attack element *δ* (line 14 of Mathematical Expression 16) determined to be restricted based on an inference attack element test set *ω* (line 12 of Mathematical Expression 16), from which inference attack elements determined to be restricted according to the sensitive inference attack element threshold *ρₓ* have been removed, is applied to restriction processing for the corresponding result data record *r_{i,j}* (lines 16 to 18 and 21 of Mathematical Expression 16), does not affect restriction processing for a next result data record *r*_{*i*,*j*+1} (lines 11 and 16 of Mathematical Expression 16), and is stored in the inference knowledge storage unit 150 without being included as a previously restricted inference attack element so as not to affect restriction processing for next result data *rᵢ₊₁*, that is, without including *δ* in line 20 of Mathematical Expression 16, thereby improving data usability.

When an inference attack is detected, the probabilistic inference attack detection unit 140 notifies the security administrator terminal unit that the inference attack has been detected and restricted, and provides reporting information regarding the detection and restriction.

The restriction processing may include masking or anonymizing corresponding data attribute information d*ₗ* in result data as shown by reference numeral 1101 in FIG. 10 or corresponding data attribute information *dₕ* as shown by reference numeral 1201 in FIG. 11, or removing a data attribute *dₗ* from result data as shown by reference numeral 1102 in FIG. 10 or a data attribute *dₕ* as shown by reference numeral 1202 in FIG. 11.

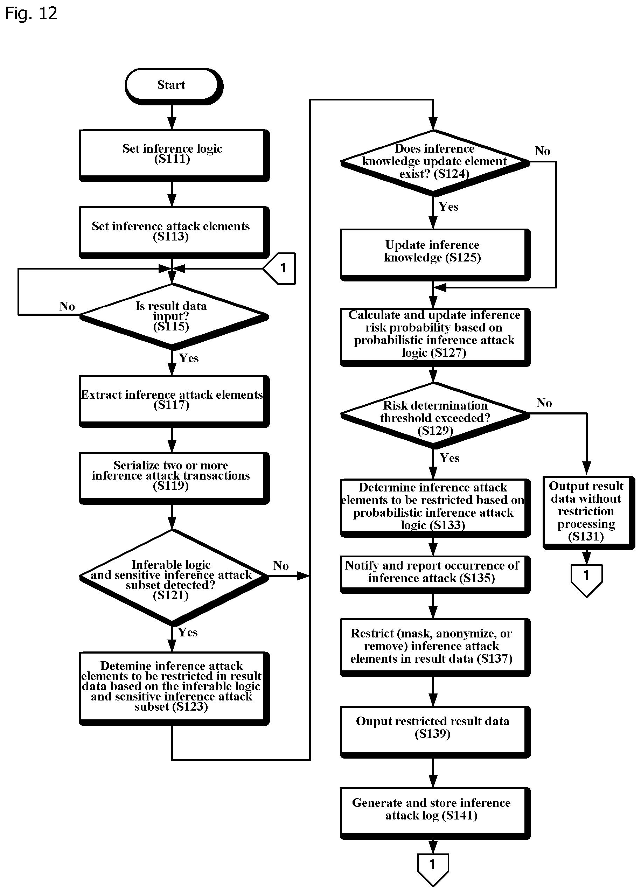

FIG. 12 is a flowchart illustrating a method for controlling DB inference attacks according to the present invention.

Referring to FIG. 12, the probabilistic inference control unit 20 provides inference logic setting interface means to the security administrator terminal unit through the inference setting unit 110, establishes inference logic including probabilistic inference attack logic, and stores the established probabilistic inference attack logic in the inference knowledge storage unit 150 as inference knowledge (S111). The inference logic setting includes a probabilistic model, probabilistic logic, probabilistic inference attack logic, inferable logic, a sensitive inference attack subset *sₓ*, a risk determination threshold *λ*, a sensitive inference attack element threshold *ρₓ*, and an inferable logic threshold *τ*.

When the setting is completed, the probabilistic inference control unit 20 generates inference attack elements through the inference attack element generation unit 230 of the inference setting unit 110 based on the generated probabilistic inference attack logic and inferable logic, generates an inference attack element set *E* including the inference attack elements, and provides the inference attack element set *E* to the inference attack element extraction units 120 (S113).

When the probabilistic inference attack logic and the inference attack elements are established, the probabilistic inference control unit 20 monitors, through the inference attack element extraction units 120, whether result data is received from the DBMS 30 (S115).

When result data is received, the probabilistic inference control unit 20 examines, through the inference attack element extraction units 120, whether each inference attack element in the predefined inference attack element set is included in the result data. When an inference attack element is included, the probabilistic inference control unit 20 extracts the inference attack element, generates an inference attack transaction *t*_{(*u*,*p*,*q*)} composed of the extracted inference attack elements, and outputs the generated inference attack transaction to the inference attack serialization unit 130 (S117).

When the inference attack transactions *t*_{(*u*,*p*,*q*)} are received, the probabilistic inference control unit 20 causes the inference attack serialization unit 130 to serialize the inference attack transactions *t*_{(*u*,*p*,*q*)} received from the plurality of inference attack element extraction units 120 in chronological order of result data input time and output the serialized inference attack transactions to the probabilistic inference attack detection unit 140 (S119).

Through the probabilistic inference attack detection unit 140, the probabilistic inference control unit 20 monitors whether an inference attack element matching one or both of inferable logic *cₓ* and a sensitive inference attack subset *sₓ* exists in an inference attack element test set including inference attack elements contained in the serialized inference attack transaction received from the inference attack serialization unit 130, together with inference attack elements previously provided to the inquirer terminal unit and stored in the inference knowledge storage unit (S121).

When some of the inference attack elements in the inference attack element test set for the received inference attack transaction match inference attack elements of the inferable logic *cₓ* or the sensitive inference attack subset *sₓ*, the probabilistic inference control unit 20 causes the probabilistic inference attack detection unit 140 to determine, according to the respective thresholds, inference attack elements to be restricted from among the inference attack elements included in the result data that are capable of constituting the inferable logic *cₓ* or the sensitive inference attack subset *sₓ*, based on the inference attack element test set (S123). Determining inference attack elements to be restricted according to the inferable logic threshold *τ* when the inference attack element test set includes inference attack elements matching the inferable logic *cₓ* may be performed as described above in S121 through S123 or may be performed before the result data is output, that is, before step S131 and after step S137 described below.

When inference attack elements to be restricted are determined, or when there are no inference attack elements to be restricted according to the inferable logic and the sensitive inference attack subset, the probabilistic inference control unit 20 determines, through the probabilistic inference attack detection unit 140, whether an inference knowledge update element exists (S124). That is, the probabilistic inference attack detection unit 140 determines whether there is an inference attack element to be newly restricted or newly provided to the inquirer.

When an inference attack element to be newly restricted or newly provided exists, the probabilistic inference attack detection unit 140 stores the inference attack element in the inference knowledge storage unit 150 as inference knowledge, thereby updating the inference knowledge (S125).

The probabilistic inference attack detection unit 140 calculates an inference risk probability based on an inference attack element test set from which inference attack elements determined to be restricted according to the inferable logic and the sensitive inference attack subset have been excluded from among the inference attack elements included in the result data (S127).

When the inference risk probability is calculated, the probabilistic inference attack detection unit 140 examines whether the calculated inference risk probability exceeds the predefined risk determination threshold *λ* and determines whether to additionally restrict an inference attack element (S129).

When the inference risk probability does not exceed the risk determination threshold, the probabilistic inference attack detection unit 140 outputs restricted result data in which any inference attack elements already restricted according to the sensitive inference attack element threshold *ρₓ* and the inferable logic threshold *τ* are reflected (S131).

On the other hand, when the inference risk probability exceeds the risk determination threshold, the probabilistic inference attack detection unit 140 determines that an inference attack has been detected, additionally determines an inference attack element to be restricted based on the probabilistic inference attack logic *αₓ* (S133), notifies the security administrator terminal unit that the inference attack has occurred, and provides reporting information regarding the inference attack (S135).

Through the probabilistic inference attack control unit 160, the probabilistic inference control unit 20 restricts data attribute information corresponding to the inference attack elements determined to be restricted from among the plurality of data attributes constituting the result data, according to the risk determination threshold *λ*, the sensitive inference attack element threshold *ρₓ*, and the inferable logic threshold *τ* (S137).

Through the probabilistic inference attack control unit 160, the probabilistic inference control unit 20 provides the restricted result data to the corresponding inquirer terminal unit through the input/output unit 10 (S139).

The probabilistic inference attack control unit 160 generates an inference attack log including a result of detecting and restricting the inference attack and stores the generated inference attack log in the inference attack log storage unit 170 (S141).

Although the present invention has been described with reference to typical preferred embodiments, those skilled in the art will readily understand that various improvements, modifications, substitutions, or additions may be made without departing from the spirit of the present invention. If embodiments incorporating such improvements, modifications, substitutions, or additions fall within the scope of the appended claims, the technical ideas thereof should also be considered to fall within the scope of the present invention.

### DESCRIPTION OF REFERENCE NUMERALS

| | | | |
|---|---|---|---|
| 10: | input/output unit | 20: | probabilistic inference control unit |
| 30: | Database Management System (DBMS) | | |
| 40: | DB | 110: | inference setting unit |
| 120: | inference attack element extraction unit | 130: | inference attack serialization unit |
| 140: | probabilistic inference attack detection unit | 150: | inference knowledge storage unit |
| 160: | probabilistic inference attack control unit | 170: | inference attack log storage unit |
| 210: | inference logic setting interface unit | | |
| 220: | inference logic generation unit | 221: | probabilistic logic generation unit |
| 222: | inferable logic generation unit | 223: | probabilistic inference attack logic generation unit |
| 230: | inference attack element generation unit | 240: | sensitive inference attack subset setting unit |
| 250: | threshold setting unit | | |

## Claims

1. An apparatus for controlling DB inference attacks based on probabilistic logic, comprising:
an input/output unit configured to receive queries from a plurality of inquirer terminal units and output the received queries, receive result data corresponding to responses to the queries, and provide the result data to the corresponding inquirer terminal unit;
one or more Database Management Systems (DBMSs) including at least one Database (DB) comprising a plurality of data attributes, wherein at least one of the DBs includes a sensitive data attribute designated as sensitive information to be protected, the one or more DBMSs being configured to search the DBs in response to queries received from the input/output unit and generate and output result data corresponding to the search results; and
a probabilistic inference control unit configured to establish inference knowledge including inference attack elements corresponding to data attributes that can be used to probabilistically infer the sensitive information, and a probabilistic model, probabilistic logic, and probabilistic inference attack logic, each constructed based on the inference attack elements and probabilities associated with the inference attack elements, calculate, with reference to the inference knowledge, an inference risk probability for inferring the sensitive information from inference attack elements extracted from result data received from the one or more DBMSs, determine that an inference attack has been detected when the calculated inference risk probability exceeds a risk determination threshold (*λ*), restrict data attribute information corresponding to at least one inference attack element capable of inferring the sensitive information among the inference attack elements included in the result data in which the inference attack has been detected, and transmit the restricted result data to the corresponding inquirer terminal unit through the input/output unit.

2. The apparatus of claim 1,
wherein the probabilistic inference control unit comprises:
an inference knowledge storage unit configured to store inference knowledge including the probabilistic inference attack logic and inference attack elements corresponding to data attributes previously provided to the inquirer terminal unit;
an inference setting unit configured to receive, through a security administrator terminal unit, one or more data attributes included in the DB that can be used to probabilistically infer the sensitive information, together with probability values corresponding to probabilities of inferring the sensitive information from the respective data attributes, generate a probabilistic model, probabilistic logic, and probabilistic inference attack logic including the one or more data attributes and the probability values, store the generated probabilistic model, probabilistic logic, and probabilistic inference attack logic as inference knowledge in the inference knowledge storage unit, designate the data attributes included in the probabilistic inference attack logic as inference attack elements, and output an inference attack element set including the designated inference attack elements;
an inference attack element extraction unit configured to receive and establish the inference attack element set from the inference setting unit, extract inference attack elements corresponding to the inference attack element set from result data received from the DBMSs, generate an inference attack transaction composed of the extracted inference attack elements, and output the generated inference attack transaction;
a probabilistic inference attack detection unit configured to construct an inference attack element test set including inference attack elements contained in the inference attack transaction, together with inference attack elements previously provided to the inquirer terminal unit and stored in the inference knowledge storage unit, examine whether the inference attack elements included in the inference attack element test set satisfy any of the probabilistic inference attack logics stored in the inference knowledge storage unit, calculate, with reference to the probabilistic inference attack logic, an inference risk probability for inferring the sensitive information from the inference attack elements included in the inference attack element test set, determine that an inference attack has been detected when the calculated inference risk probability exceeds the risk determination threshold (*λ*), and output restriction request information specifying one or more inference attack elements to be restricted among the inference attack elements included in the inference attack transaction when the inference attack is detected; and
a probabilistic inference attack control unit configured to, upon receiving the restriction request information from the probabilistic inference attack detection unit, restrict data attribute information corresponding to the inference attack elements specified in the restriction request information among data attributes included in result data corresponding to the inference attack transaction in which the inference attack has been detected, and provide the restricted result data to the corresponding inquirer terminal unit through the input/output unit.

3. The apparatus of claim 2,
wherein the probabilistic inference control unit further comprises:
an inference attack serialization unit configured to serialize and output a plurality of inference attack transactions received from the inference attack element extraction unit,
wherein the probabilistic inference attack detection unit is configured to detect an inference attack based on the serialized inference attack transactions.

4. The apparatus of claim 2,
wherein the inference setting unit comprises:
an inference logic generation unit configured to receive, through a security administrator terminal unit, one or more data attributes included in the DB that can be used to infer the sensitive information, together with probability values corresponding to probabilities of inferring the sensitive information from the respective data attributes, generate a probabilistic model, probabilistic logic, and probabilistic inference attack logic including the one or more data attributes and the probability values, store the generated probabilistic model, probabilistic logic, and probabilistic inference attack logic as inference knowledge in the inference knowledge storage unit; and
an inference attack element generation unit configured to designate data attributes included in the probabilistic inference attack logic as inference attack elements and output the designated inference attack elements.

5. The apparatus of claim 4,
wherein the inference logic generation unit comprises:
a probabilistic logic generation unit configured to receive, through a security administrator terminal unit, one or more data attributes included in the DB that are directly associated with the sensitive information and can be used to infer the sensitive information, receive probabilities of inferring the sensitive information from the one or more data attributes, generate probabilistic logic and calculated probability values corresponding to the probabilistic logic based on a probabilistic model and conditional probabilities for the respective data attributes, and store the generated probabilistic logic and the calculated probability values as inference knowledge in the inference knowledge storage unit;
a probabilistic inference attack logic generation unit configured to generate, as inference knowledge, probabilistic inference attack logic including the probabilistic logic generated by the probabilistic logic generation unit, and store the generated probabilistic inference attack logic in the inference knowledge storage unit; and
an inferable logic generation unit configured to receive one or more data attributes that can be used to increase the accuracy of inference attacks on the sensitive information, generate inferable logic including the one or more data attributes, combine the inferable logic with the probabilistic inference attack logic to generate expanded inference attack logic, and store the expanded inference attack logic as inference knowledge in the inference knowledge storage unit.

6. The apparatus of claim 5,
wherein the inference setting unit further comprises:
a sensitive inference attack subset setting unit configured to receive, through a security administrator terminal unit, from a security administrator, one or more inference attack elements included in the probabilistic inference attack logic that have a greater influence on inferring the sensitive information than other inference attack elements, and register and establish the received one or more inference attack elements as a sensitive inference attack subset.

7. The apparatus of claim 6,
wherein the inference setting unit further comprises:
a threshold setting unit configured to, in response to a threshold setting request received from a security administrator terminal unit, receive a risk determination threshold (*λ*) for detecting an inference attack based on the probabilistic inference attack logic, a sensitive inference attack element threshold (*ρₓ*) indicating the number of inference attack elements to be restricted among the inference attack elements included in the sensitive inference attack subset when the sensitive inference attack subset is detected, and an inferable logic threshold (*τ*) indicating the number of inference attack elements to be restricted among the inference attack elements included in the inferable logic when the inferable logic is detected, and store and establish the received thresholds in the inference knowledge storage unit.

8. The apparatus of claim 7,
wherein the probabilistic inference attack detection unit is configured to:
for each inference attack transaction record constituting the inference attack transaction, construct an inference attack element test set including inference attack elements contained in the inference attack transaction record, together with previously provided inference attack elements stored in the inference knowledge storage unit;
when the inference attack element test set includes an inference attack element set corresponding to the sensitive inference attack subset, determine sensitive inference attack elements to be restricted according to the sensitive inference attack element threshold (*ρₓ*), store the sensitive inference attack elements determined to be restricted in the inference knowledge storage unit as previously restricted sensitive inference attack elements, and determine newly restricted sensitive inference attack elements, from an inference attack element test set generated thereafter, according to the sensitive inference attack element threshold (*ρₓ*), based on an inference attack element set obtained by removing the previously restricted sensitive inference attack elements;
remove the sensitive inference attack elements to be restricted from the inference attack element test set, and construct an inference attack element evaluation candidate set by removing the sensitive inference attack elements to be restricted from inference attack elements common to both the inference attack element test set and the probabilistic inference attack logic, calculate an inference risk probability for inferring the sensitive information from the inference attack elements included in the inference attack element test set with reference to the probabilistic inference attack logic, determine that an inference attack has been detected when the calculated inference risk probability exceeds the risk determination threshold (*λ*), determine one of the inference attack elements included in the inference attack element evaluation candidate set as an inference attack element to be restricted, update the inference attack element test set and the inference attack element evaluation candidate set by removing the determined inference attack element therefrom, repeatedly calculate the inference risk probability based on the updated inference attack element test set, and repeatedly determine one of the inference attack elements included in the inference attack element evaluation candidate set as an inference attack element to be restricted until the calculated inference risk probability no longer exceeds the risk determination threshold (*λ*).

9. The apparatus of claim 8,
wherein the probabilistic inference attack detection unit is configured to determine whether the inference attack element test set includes inference attack elements constituting the inferable logic, and, when it is determined that the inferable logic is constituted, determine one or more inference attack elements to be restricted among the inference attack elements constituting the inferable logic according to the inferable logic threshold (*τ*).

10. The apparatus of claim 9,
wherein, in calculating the inference risk probability for inferring the sensitive information from inference attack elements constituting the probabilistic inference attack logic, based on the inference attack element test set from which the sensitive inference attack elements to be restricted have been removed,
the inference risk probability is calculated in real time when detecting the inference attack, or probabilities for the probabilistic logic are calculated in advance based on the probabilistic model and conditional probabilities for the respective data attributes and stored in the inference knowledge storage unit, and, when detecting the inference attack, previously stored calculated probability values corresponding to the probabilistic inference attack logic are retrieved from the inference knowledge storage unit based on the inference attack element test set and referenced.

11. The apparatus of claim 2,
wherein the probabilistic inference attack control unit is configured to restrict the data attribute information corresponding to the inference attack elements to be restricted in the result data by performing masking or anonymization of the data attribute information, or by removing the data attribute information from the result data.

12. A method for controlling database (DB) inference attacks based on probabilistic logic, the method comprising:
a DB search process in which one or more DBMSs managing at least one DB including sensitive information to be protected among one or more DBs storing information including a plurality of data attributes perform a search of the DBs in response to a query and generate and output result data corresponding to a search result; and
a probabilistic inference control process in which a probabilistic inference control unit establishes inference knowledge including inference attack elements corresponding to data attributes that can be used to probabilistically infer the sensitive information, and a probabilistic model, probabilistic logic, and probabilistic inference attack logic, each constructed based on the inference attack elements and probabilities associated with the inference attack elements, calculates, with reference to the inference knowledge, an inference risk probability for inferring the sensitive information from inference attack elements extracted from the result data received from the DBMSs, determines that an inference attack has been detected when the calculated inference risk probability exceeds a risk determination threshold (*λ*), restricts data attributes corresponding to at least one inference attack element capable of inferring the sensitive information among the inference attack elements included in the result data in which the inference attack has been detected, and transmits the restricted result data to a corresponding inquirer terminal unit through an input/output unit.

13. The method of claim 12,
wherein the probabilistic inference control process comprises:
an inference setting step in which an inference setting unit receives, through a security administrator terminal unit, from a security administrator, one or more data attributes included in the DB that can be used to probabilistically infer the sensitive information, together with probability values corresponding to probabilities of inferring the sensitive information from the respective data attributes, generates a probabilistic model, probabilistic logic, and probabilistic inference attack logic including the one or more data attributes and the probability values, stores the generated probabilistic model, probabilistic logic, and probabilistic inference attack logic as inference knowledge in an inference knowledge storage unit, designates the data attributes included in the probabilistic inference attack logic as inference attack elements, and outputs an inference attack element set including the designated inference attack elements;
an inference attack element extraction step in which the probabilistic inference control unit receives the inference attack element set from the inference setting unit and provides the inference attack element set to an inference attack element extraction unit, the inference attack element extraction unit extracts inference attack elements corresponding to the inference attack element set from result data received from the DBMSs, generates an inference attack transaction composed of the extracted inference attack elements, and outputs the generated inference attack transaction;
a probabilistic inference attack detection step in which the probabilistic inference control unit, through a probabilistic inference attack detection unit, receives the inference attack transaction, constructs an inference attack element test set including inference attack elements contained in the inference attack transaction together with inference attack elements previously provided to the inquirer terminal unit and stored in the inference knowledge storage unit, examines whether the inference attack elements included in the inference attack element test set satisfy any of the probabilistic inference attack logics stored in the inference knowledge storage unit, calculates, with reference to the probabilistic inference attack logic, an inference risk probability for inferring the sensitive information from the inference attack elements included in the inference attack element test set, determines that an inference attack has been detected when the calculated inference risk probability exceeds the risk determination threshold (*λ*), and outputs restriction request information specifying one or more inference attack elements to be restricted among the inference attack elements included in the inference attack transaction when the inference attack is detected; and
a probabilistic inference attack control step in which the probabilistic inference control unit, through a probabilistic inference attack control unit, upon receiving the restriction request information from the probabilistic inference attack detection unit, restricts data attributes corresponding to the inference attack elements specified in the restriction request information among data attributes included in result data corresponding to the inference attack transaction in which the inference attack has been detected, and provides the restricted result data to the corresponding inquirer terminal unit through the input/output unit.

14. The method of claim 13,
wherein the probabilistic inference control process further comprises:
an inference attack serialization step in which the probabilistic inference control unit, through an inference attack serialization unit, serializes and outputs a plurality of inference attack transactions received from the inference attack element extraction unit,
wherein, in the probabilistic inference attack control step, the probabilistic inference attack control unit, upon receiving the restriction request information from the probabilistic inference attack detection unit, restricts data attributes corresponding to the inference attack elements specified in the restriction request information among data attributes included in the result data corresponding to the inference attack transaction in which the inference attack has been detected, and provides the restricted result data to the corresponding inquirer terminal unit through the input/output unit.

15. The method of claim 13,
wherein the inference setting step comprises:
an inference logic generation step in which the inference setting unit, through an inference logic generation unit, receives, from a security administrator via a security administrator terminal unit, one or more data attributes included in the DB that can be used to infer the sensitive information, together with probability values corresponding to probabilities of inferring the sensitive information from the respective data attributes, generates a probabilistic model, probabilistic logic, and probabilistic inference attack logic including the one or more data attributes and the probability values, and stores the generated probabilistic model, probabilistic logic, and probabilistic inference attack logic as inference knowledge in the inference knowledge storage unit; and
an inference attack element generation step in which the inference setting unit, through an inference attack element generation unit, designates the data attributes included in the probabilistic inference attack logic as inference attack elements and outputs the designated inference attack elements.

16. The method of claim 15,
wherein the inference logic generation step comprises:
a probabilistic logic generation step in which the inference logic generation unit, through a probabilistic logic generation unit, receives, from a security administrator via a security administrator terminal unit, one or more data attributes included in the DB that are directly associated with the sensitive information and can be used to infer the sensitive information, receives probabilities for inferring the sensitive information from the one or more data attributes, generates probabilistic logic and calculated probability values corresponding to the probabilistic logic based on a probabilistic model and conditional probabilities for the respective data attributes, and stores the generated probabilistic logic and the calculated probability values in the inference knowledge storage unit as inference knowledge;
a probabilistic inference attack logic generation step in which the inference logic generation unit, through a probabilistic inference attack logic generation unit, generates, as inference knowledge, probabilistic inference attack logic including the probabilistic logic generated by the probabilistic logic generation unit, and stores the generated probabilistic inference attack logic in the inference knowledge storage unit; and
an inferable logic generation step in which the inference logic generation unit, through an inferable logic generation unit, receives one or more data attributes that can be used to increase the accuracy of inference attacks on the sensitive information, generates inferable logic including the one or more data attributes, combines the inferable logic with the probabilistic inference attack logic to generate expanded inference attack logic, and stores the expanded inference attack logic as inference knowledge in the inference knowledge storage unit.

17. The method of claim 15,
wherein the inference setting step further comprises:
a sensitive inference attack subset setting step in which the inference setting unit, through a sensitive inference attack subset setting unit, receives, from a security administrator via a security administrator terminal unit, one or more inference attack elements included in the probabilistic inference attack logic that have a greater influence on inferring the sensitive information than other inference attack elements, and registers and establishes the received one or more inference attack elements as a sensitive inference attack subset.

18. The method of claim 16,
wherein the inference setting step further comprises:
a sensitive inference attack subset setting step in which the inference setting unit, through a sensitive inference attack subset setting unit, receives, from a security administrator via a security administrator terminal unit, one or more inference attack elements included in the probabilistic inference attack logic that have a greater influence on inferring the sensitive information than other inference attack elements, and registers and establishes the received one or more inference attack elements as a sensitive inference attack subset; and
a threshold setting step in which the inference setting unit, in response to a threshold setting request received from a security administrator terminal unit, through a threshold setting unit, receives a risk determination threshold (*λ*) for detecting an inference attack based on the probabilistic inference attack logic, a sensitive inference attack element threshold (*ρₓ*) indicating the number of inference attack elements to be restricted among the inference attack elements included in the sensitive inference attack subset when the sensitive inference attack subset is detected, and an inferable logic threshold (*τ*) indicating the number of inference attack elements to be restricted among the inference attack elements included in the inferable logic when the inferable logic is detected, and stores and establishes the received thresholds in the inference knowledge storage unit.

19. The method of claim 18,
wherein the probabilistic inference attack detection step comprises:
a step of determining sensitive inference attack elements to be restricted in which the probabilistic inference attack detection unit, for each inference attack transaction record constituting the inference attack transaction, constructs an inference attack element test set including inference attack elements contained in the inference attack transaction record, together with previously provided inference attack elements stored in the inference knowledge storage unit, when the inference attack element test set includes an inference attack element set corresponding to the sensitive inference attack subset, determines sensitive inference attack elements to be restricted according to the sensitive inference attack element threshold (*ρₓ*), stores the sensitive inference attack elements determined to be restricted in the inference knowledge storage unit as previously restricted sensitive inference attack elements, and determines newly restricted sensitive inference attack elements, from an inference attack element test set generated thereafter, according to the sensitive inference attack element threshold (*ρₓ*), based on an inference attack element set obtained by removing the previously restricted sensitive inference attack elements;
an inference attack detection step in which the probabilistic inference attack detection unit removes the sensitive inference attack elements to be restricted from the inference attack element test set, constructs an inference attack element evaluation candidate set by removing the sensitive inference attack elements to be restricted from inference attack elements common to both the inference attack element test set and the probabilistic inference attack logic, calculates an inference risk probability for inferring the sensitive information based on the inference attack element test set, and determines that an inference attack has been detected when the calculated inference risk probability exceeds the risk determination threshold (*λ*); and
a first step of determining inference attack elements to be restricted in which the probabilistic inference attack detection unit, when it is determined that the inference attack has been detected, determines one of the inference attack elements included in the inference attack element evaluation candidate set as an inference attack element to be restricted, updates the inference attack element test set and the inference attack element evaluation candidate set by removing the determined inference attack element therefrom, repeatedly calculates the inference risk probability based on the updated inference attack element test set, and repeatedly determines an inference attack element included in the inference attack element evaluation candidate set as an inference attack element to be restricted until the calculated inference risk probability no longer exceeds the risk determination threshold (*λ*).

20. The method of claim 19,
wherein the probabilistic inference attack detection step further comprises:
a second step of determining inference attack elements to be restricted in which the probabilistic inference attack detection unit determines whether the inference attack element test set includes inference attack elements constituting the inferable logic, and, when it is determined that the inferable logic is constituted, determines one or more inference attack elements to be restricted among the inference attack elements constituting the inferable logic according to the inferable logic threshold (*τ*).

21. The method of claim 19,
wherein, in the probabilistic inference attack detection step, the probabilistic inference attack detection unit, in calculating an inference risk probability for inferring the sensitive information from inference attack elements constituting the probabilistic inference attack logic, based on the inference attack element test set from which the sensitive inference attack elements to be restricted have been removed,
calculates the inference risk probability in real time when detecting the inference attack, or calculates probabilities for the probabilistic logic in advance based on the probabilistic model and conditional probabilities for the respective data attributes, stores the calculated probabilities in the inference knowledge storage unit, and, when detecting the inference attack, retrieves previously stored calculated probability values corresponding to the probabilistic inference attack logic from the inference knowledge storage unit based on the inference attack element test set and references the retrieved calculated probability values.

22. The method of claim 13,
wherein, in the probabilistic inference attack control step, the probabilistic inference attack control unit restricts the data attribute information corresponding to the inference attack elements to be restricted in the result data by performing masking or anonymization of the data attribute information, or by removing the data attribute information from the result data.
